(19)

**Europäisches Patentamt**
**European Patent Office**
**Office européen des brevets**

(11)  **EP 4 442 117 A2**

(12)  # EUROPÄISCHE PATENTANMELDUNG

(43) Veröffentlichungstag:
**09.10.2024   Patentblatt 2024/41**

(21) Anmeldenummer: **24168088.3**

(22) Anmeldetag: **02.04.2024**

(51) Internationale Patentklassifikation (IPC):
**A01N 65/08** [(2009.01)]    **A01N 65/34** [(2009.01)]
**A01N 25/30** [(2006.01)]    **A01N 59/20** [(2006.01)]
**A01P 1/00** [(2006.01)]    **A01P 3/00** [(2006.01)]

(52) Gemeinsame Patentklassifikation (CPC):
(C-Sets verfügbar)
**A01N 65/08; A01P 1/00; A01P 3/00**      (Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **03.04.2023   DE 102023108512**

(71) Anmelder: **Hochschule Geisenheim, Körperschaft
des
Öffentlichen Rechts
65366 Geisenheim (DE)**

(72) Erfinder:
• **Besrukow, Paul
  65366 Geisenheim (DE)**
• **Schweiggert, Ralf
  65366 Geisenheim (DE)**
• **Will, Frank
  65366 Geisenheim (DE)**
• **Berkelmann-Löhnertz, Beate
  65366 Geisenheim (DE)**

(74) Vertreter: **Durm Patentanwälte PartG mbB
Patentanwälte
Moltkestrasse 45
76133 Karlsruhe (DE)**

(54)  ## PESTIZID, VERFAHREN ZU SEINER HERSTELLUNG UND SEINE VERWENDUNG

(57)   Beschrieben werden Pestizide auf der Basis von Extrakten aus Reststoffen des Weinbaus, insbesondere Rebholzextrakten, und Apfelextrakten, die Ligninsulfonat und/oder kupferbasierte Pestizide enthalten können, Verfahren zu deren Herstellung sowie deren Verwendung zur Bekämpfung von Pflanzenkrankheiten, insbesondere dem Falschen Mehltau der Rebe.

EP 4 442 117 A2

**(Forts. nächste Seite)**

Fig.2

Fig. 3

Fig.4

(52) Gemeinsame Patentklassifikation (CPC): (Forts.)

C-Sets
**A01N 65/08, A01N 59/20, A01N 65/34**

**Beschreibung**

Die vorliegende Erfindung betrifft ein Pestizid, ein Verfahren zu seiner Herstellung und seine Verwendung.

In den letzten Jahren hat sich die Landwirtschaft um nachhaltige Bewirtschaftungspraktiken bemüht und den Einsatz von Agrochemikalien bei der Erzeugung konventioneller und ökologischer Produkte reduziert. In den USA hat die Environmental Protection Agency (EPA) das "Conventional Reduced Risk Pesticide Program" (Programm für konventionelle Pestizide mit verringertem Risiko) vorangetrieben, um die Anwendung nachhaltiger Alternativen gegenüber risikoreichen Pestiziden zu fördern.[1] Parallel haben die EU-Behörden in Europa die sog. "Farm-to-Fork"-Strategie im Rahmen des "European Green Deal" ausgearbeitet, welche eine Halbierung des Pestizideinsatzes im Pflanzenschutz bis zum Jahr 2030 sowie das Erreichen eines Anteils von 25 % ökologischer Anbauflächen vorsieht, was eine Steigerung um mehr als das Doppelte gegenüber dem Anteil von 12 % im Jahr 2020 bedeutete.[2,3]

Eine der wichtigsten Kulturpflanzen in Europa ist die Weinrebe (*Vitis vinifera* L.), die mit 3,5 Millionen Hektar 50 % der weltweiten Rebfläche in Anspruch nimmt (Daten für das Jahr 2020).[4] Aufgrund der hohen Anfälligkeit klassischer Rebsorten für verschiedene Krankheiten und Schädlinge erfordert die Weinrebe eine vergleichsweise hohe Anzahl von Pflanzenschutz-Behandlungen pro Saison. So zählt der Behandlungsindex (*pesticide treatment index,* PTI) für Keltertrauben seit vielen Jahren zu den höchsten der diesbezüglich untersuchten Kulturen und lag im Jahr 2020 in Deutschland bei 17,06, was nur noch von Äpfeln mit einem PTI von 28,24 übertroffen wurde. Hervorzuheben ist, dass 95 % der Anwendungen bei der Weinrebe auf den Einsatz von Fungiziden zurückzuführen sind.[5]

Da der fortschreitende Klimawandel zu häufigeren extremen Niederschlagsereignissen, höheren Temperaturen und längeren Jahreszeiten führen wird, ist mit einem vermehrten Auftreten von Pilzkrankheiten wie Echter und Falscher Mehltau sowie einer beschleunigten Erregerentwicklung zu rechnen, die das Überleben der Erreger begünstigt.[6] Infolgedessen ist mit einem erhöhten Bedarf an Pflanzenschutzmitteln für Reben zu rechnen, wodurch die Erreichung der beispielsweise im Rahmen der Farm-to-Fork-Strategie der EU zusätzlich erschwert wird.

Der Falsche Mehltau der Weinrebe wird durch den biotrophen Oomyceten *Plasmopara viticola* (Berk. & Curt.) Berl. & De Toni (1888) verursacht. Die Krankheit zählt zu den wirtschaftlich bedeutsamsten Rebkrankheiten und erfordert nahezu die Hälfte der oben dargestellten Fungizidapplikationen. Im integrierten Weinbau wird der Falsche Mehltau durch den Einsatz verschiedener organischsynthetischer Fungizide sowie mit Präparaten auf Kupferbasis bekämpft. Während erstere in der EU nicht für den ökologischen Weinbau zugelassen sind, werden kupferhaltige Pflanzenschutzmittel trotz ihrer negativen ökotoxikologischen Auswirkungen im ökologischen Landbau toleriert. Aufgrund fehlender Alternativen wurde deren Zulassung in der Vergangenheit mehrfach verlängert. Die aktuell gültige Zulassung läuft im Jahr 2025 aus.[7]

Aus Gründen des Umweltschutzes hat der Gesetzgeber die Forschung über die Vergabe von Forschungsgeldern damit beauftragt, nach Möglichkeiten zur Verringerung des Kupfereinsatzes bzw. zur kompletten Kupfersubstitution zu suchen. So führte die teilweise Substitution von Kupfer durch anorganische Phosphonate oder aus tierischen Reststoffen gewonnene Chitosane zu einer erhöhten Wirksamkeit von Kupfer in Jahren mit hohem Krankheitsdruck.[8,9] Weitere aktuell untersuchte Beispiele für biobasierte, antimykotische Extrakte oder Verbindungen sind Laminarin aus der Braunalge *Laminaria digitata*,[10] Blattextrakte aus *Inula viscosa,* die das Sesquiterpen Tomentosin enthalten[10] sowie Extrakte aus Äpfeln, die u.a. auf der Wirksubstanz Phlorizin basieren.[11] Darüber hinaus haben Nebenprodukte des Weinbaus wie zum Beispiel Trester oder Rebholz, das nach dem Winterschnitt in der Regel entweder verbrannt oder auf dem Feld kompostiert wird, in letzter Zeit die Aufmerksamkeit der Forschung erregt.[12,13] Beispiele für Wirkstoffe in diesen Extrakten sind Resveratrol sowie seine methoxylierten, oligomerisierten oder glycosylierten Derivate.[14] Erste In-vitro-Studien mit solchen Extrakten haben die fungitoxische Aktivität sowohl von Rebholz-Extrakten als auch von isolierten Stilbenoiden gegenüber *P. viticola* gezeigt, wobei eine starke antimykotische Kapazität der Oligomere $\varepsilon$-Viniferin, Vitisin B und Hopeaphenol hervorgehoben wurde.[14-16] Basierend auf diesen Ergebnissen haben Richard et al.[17] die hemmende Wirkung stilbenoidreicher Rebholzextrakte sowohl an Topfreben im Gewächshaus (ca. 80 %ige Reduktion der infizierten Blattfläche) als auch in geringerem Maße in Weinbergstudien (ca. 60%ige Reduktion der infizierten Blattfläche) mit einer maltodextrinbasierten Rebholzextrakt-Formulierung (Vineatrol®) bestätigt. Darüber hinaus wurde kürzlich im Rahmen einer mehrjährigen Studie an drei unterschiedlichen Rebsorten gezeigt, dass ein von Billet et al. hergestellter roher Rebholzextrakt eine etwa 40 %ige Verringerung des Befalls mit Falschem Mehltau bewirkte.[18] Diese Studien betonen jedoch auch die Notwendigkeit einer adäquaten Extrakt-Formulierung zur Erhöhung der Stabilität und der Wasserlöslichkeit der enthaltenen bioaktiven Pflanzenstoffe einerseits und der Regenfestigkeit andererseits. Darüber hinaus steht eine oftmals mangelhafte Anwendbarkeit der in der Regel nicht rieselfähigen, hygroskopischen und häufig klebrigen Extrakte einer effizienten kommerziellen Anwendung im Wege.

In JP2003095825A werden eine fungizide Zusammensetzung für Landwirtschaft und Gartenbau sowie ein synergistisches Mittel für Fungizide auf Strobilurinbasis offenbart. Die fungizide Zusammensetzung für die Landwirtschaft und den Gartenbau umfasst ein Fungizid auf Strobilurinbasis und einen Pflanzenextrakt, abgeleitet von Tee, Quebracho, Mimosa, Apfel, Weintraube oder Rosmarin.

Ausgehend von diesem Stand der Technik liegt der vorliegenden Erfindung die Aufgabe zugrunde, ein Pestizid, ein Verfahren zu seiner Herstellung sowie seine Verwendung bereitzustellen, mit dem die aus dem vorstehenden Stand der Technik bekannten Nachteile vermieden werden können.

Erfindungsgemäß erreicht wird dies durch die Gegenstände der unabhängigen Ansprüche. Bevorzugte Ausführungsformen sind in den abhängigen Ansprüchen angegeben.

Demzufolge wird erfindungsgemäß ein Pestizid bereitgestellt, das folgende Bestandteile umfasst:

(a) einen Extrakt aus Reststoffen des Weinbaus, der bei der Verwendung im ökologischen oder integrierten Landbau, z. B. dem Wein-, Apfel,- Kartoffel oder Hopfenanbau, eine fungizide Wirksamkeit hat, wobei der Extrakt aus Reststoffen des Weinbaus aus Rebholz gewonnen wird, und

(b) 1 bis 99 g/100 ml Ligninsulfonat, bevorzugt 10 g/100 ml bis 70 g/100 ml, besonders bevorzugt 20 g/100 ml bis 50 g/100 ml Ligninsulfonat, und/oder einen Apfelextrakt, der bei der Verwendung im ökologischen oder integrierten Landbau eine fungizide Wirksamkeit hat.

In dieser Zusammensetzung sind die Bestandteile gut gelöst und/oder liegen in dispergierter Form oder pulverförmig vor. Ferner sind die Bestandteile biologisch abbaubar. Zudem zeigen sie eine gute Wirksamkeit gegen pilzbedingte Pflanzenkrankheiten wie insbesondere den Falschen Mehltau. Als Extrakt aus Reststoffen des Weinbaus kann insbesondere Rebholzextrakt verwendet werden. Beispielsweise ist aber auch eine Verwendung von Tresterextrakt denkbar. Unter Rebholz werden hierin insbesondere teilweise oder vollständig verholzte sowie nicht, teilweise oder vollständig mit Blättern besetzte Pflanzenteile von Weinreben (Vitis spp.) verstanden.

Vorliegend wird eine Ligninsulfonat-basierte Formulierung eines Extrakts aus Reststoffen des Weinbaus, bevorzugt eine Rebholzextrakt-Formulierung, sowohl als partieller als auch vollständiger Ersatz für Pflanzenschutzmittel, insbesondere für kupferbasierte Wirkstoffe, bereitgestellt und ihre praktisch relevante, potenziell synergistische Anti-Pilz-Aktivität - insbesondere gegenüber *P. viticola* - bei gleichzeitiger Anwendung entweder mit einem derzeit verwendeten kupferbasierten Wirkstoff oder einem separat hergestellten (poly)phenolreichen Apfelextrakt beschrieben. Unterschiedliche Ligninsulfonate können dabei verwendet werden, beispielsweise Natrium-Ligninsulfonat, Calcium-Ligninsulfonat und andere.

Der Begriff "Pestizid" ist eine aus dem englischen Sprachgebrauch übernommene Bezeichnung für Chemikalien und Mikroorganismen, mit der als lästig oder schädlich angesehene Lebewesen, Viren und Viroide getötet, vertrieben oder in Keimung, Wachstum oder Vermehrung gehemmt werden können. Mit den Pestiziden gemäß der vorliegenden Erfindung kann insbesondere die Kulturpflanze Rebe vor einem Befall mit dem Falschen Mehltau - hervorgerufen durch *Plasmopara viticola* - geschützt werden.

Vor allem Extrakte aus Nebenströmen der Landwirtschaft (Abfallstoffe) haben im Sinne der Nachhaltigkeit und "Recycling-Wirtschaft" großes Interesse geweckt. Beispielweise wurde für Extrakte aus Rebholz, welches im europäischen Weinbau mit bis zu 30 Mio. t/Jahr als "Abfall" anfällt und für gewöhnlich verbrannt oder als Kompost im Weinberg liegen gelassen wird, bereits eine fungizide Wirkung gegenüber *P. viticola,* dem Erreger des Falschen Mehltaus der Rebe, nachgewiesen. Diese ist nach aktuellem Stand des Wissens auf die darin vorhandenen Polyphenole, im Speziellen bei Rebholzextrakten die "Stilbenoide" zurückzuführen. Eine praxisnahe Applikation solcher stilbenoidreicher Rebholzextrakte wird aktuell jedoch durch deren ungenügende antimikrobielle Wirksamkeit, die vergleichsweise hohe Einsatzmengen erforderlich machte, sowie einen insuffizienten Extraktionsprozess und unzureichende Stabilität der Stilbenoide erschwert. Hinzu kommt die hygroskopische Eigenschaft der Extrakte, die klebrige und in der Folge nicht rieselfähige Endprodukte zur Folge hat und daher einen Einsatz als Pflanzenschutzmittel in der Praxis erschwert. Eine kommerzielle Vermarktung von stilbenoidreichen Präparaten erfolgt derzeit vorwiegend als Nahrungsergänzungsmittel (z. B. Vineatrol®, Fa. ActiChem, Montauban, Frankreich).

Die antimikrobielle Wirkung von Extrakten aus Reststoffen des Weinbaus wie z. B. Rebholzextrakten oder Tresterextrakten, im Folgenden stellvertretend als "Rebholzextrakte" bezeichnet, war zwar bereits bekannt, jedoch wurde überraschenderweise beobachtet, dass die antimikrobielle Wirkung auf synergistische Weise deutlich gesteigert werden kann, wenn Rebholzextrakte zusammen mit Pflanzenschutzmitteln, im Folgenden stellvertretend "Kupfer-Präparate", "kupfer-basierte Präparate", "kupferhaltige Pflanzenschutzmittel" o.ä. genannt, coformuliert und/oder gemeinsam appliziert werden. Ferner wurde die Rieselfähigkeit durch Co-Formulierung mit Ligninsulfonaten erheblich gesteigert, wodurch nicht bzw. kaum hygroskopische und nicht bzw. kaum klebrige Extrakt-Formulierungen erhalten werden konnten.

Beispielsweise wurde die (protektive) biologische Wirksamkeit der hier vorgeschlagenen Präparate im Rahmen von Gewächshausversuchen an Topfreben gegen *P. viticola* untersucht und denen von Kupfer (Cuprozin progress®) sowie ligninsulfonatbasierten Rebholz-extrakten gegenübergestellt. Es konnte gezeigt werden, dass derartige Rebholzextrakte (20 g/L) die Befallsstärke durch *P. viti*cola (Inokulation: $10^5$ Sporangien/mL) von 83 % (Kontrolle Wasser) auf 44 % minimieren konnten. Eine vergleichbare Hemmwirkung auf die Pilzentwicklung konnte durch den Einsatz des praxisüblichen Kupfer-Präparats verzeichnet werden (45 %). Parallel wurden bei verschiedenen Co-Applikationen von Kupfer- und Rebholz-basierten Präparaten Befallsstärken von nur 11-14 % beobachtet, wonach gemäß Abbott's Formel [Cohen & Levy 1990] ein synergistischer Effekt (Synergie-Faktor = 1,2 → Synergie, da >1) gezeigt werden konnte.

Diese Ergebnisse zeigen, dass die Wirkung von kupfer- bzw. stilbenhaltigen Präparaten bei deren (protektivem) Einsatz zur Eindämmung von *P. viticola* durch den wechselseitigen Zusatz des jeweils anderen Präparates deutlich erhöht werden kann. Auf der Basis dieser Resultate wird daher eine Möglichkeit zur deutlichen Verminderung des Kupfereintrags gesehen.

Ähnlich wie beim Weinbau, fallen auch bei der Apfelproduktion und -verarbeitung Reststoffe wie Apfeltrester an, die reich an bioaktiven Pflanzeninhaltsstoffen sind. So wurden sekundäre Pflanzeninhaltsstoffe aus Apfeltrester *in vitro* bereits erfolgreich als Bio-Pestizide gegenüber speziellen mykotoxinbildenden Pilzen getestet. Neben Apfeltrester kann die Isolierung dieser sekundären Pflanzenstoffe, z. B. der Polyphenole, auch aus anderen Rohstoffen wie Apfelmaische, Apfelsaft (trüb), Apfelsaft (klar), Apfelsaftkonzentrat, Apfelpulver und dergleichen erfolgen.

Beispielhaft wurden polyphenolreiche Extrakte aus einem Apfelsaftkonzentrat gewonnen. Sie werden im Folgenden "Apfelextrakte" genannt. Ihre protektive Wirksamkeit gegenüber *P. viticola* an Topfreben wurde getestet und jener von Cuprozin Progress® sowie dem Rebholzextrakt gegenübergestellt. Auch Mischungen (beispielsweise 50:50 w/w) des Apfelextraktes mit dem Rebholzextrakt wurden hergestellt und getestet.

Gegenstand der vorliegenden Erfindung ist ferner ein Pestizid, das neben einem Extrakt aus Reststoffen des Weinbaus folgenden Bestandteil umfasst: einen Apfelextrakt, der bei der Verwendung im ökologischen oder integrierten Landbau, z. B. dem Wein-, Apfel,- Kartoffel- oder Hopfenanbau, eine fungizide Wirksamkeit hat.

Biologische Extrakte können hinsichtlich ihrer Zusammensetzung in Abhängigkeit von den eingesetzten Materialien und der durchgeführten Verfahren variieren, was oftmals nicht sinnvoll beschrieben werden kann. Aus diesem Grunde werden daher die beiden Extrakte (der Rebholzextrakt und der Apfelextrakt) nachfolgend anhand der Herstellungsverfahren näher charakterisiert.

In einer Ausführungsform kann der Extrakt aus Reststoffen des Weinbaus aus Rebholz bzw. der Apfelextrakt aus Reststoffen der Apfelwirtschaft und -verarbeitung gewonnen werden.

In einer weiteren Ausführungsform kann das Gewinnen aus Rebholz bzw. das Gewinnen aus Reststoffen der Apfelwirtschaft und -verarbeitung dadurch erfolgen, dass das Rebholz bzw. die Reststoffe aus der Apfelwirtschaft mit einem Lösungsmittel behandelt und anschließend das Lösungsmittel zumindest teilweise entfernt wird. Das Lösungsmittel kann mit Wasser mischbar oder unmischbar sein. Das Lösungsmittel kann Wasser, Methanol, Ethanol, Propanol, Butanol, Ethylacetat, Aceton oder Mischungen von zwei oder mehreren dieser aufweisen. Insbesondere können rein wässrige Extrakte des Rebholzes hergestellt werden, wobei das Lösungsmittel reines Wasser ist. Dem Lösungsmittel können weitere Hilfsstoffe zugesetzt werden, um bspw. die Extraktionseffizienz zu verbessern. Hierzu zählen Hilfsstoffe wie Ligninsulfonat, Stabilisatoren (Antioxidantien, UV-Stabilisatoren), pH-Regulatoren und/oder Benetzungshilfsmittel (oberflächenaktive Substanzen).

Der Extrakt aus Reststoffen des Weinbaus und der Apfelextrakt können als Lösungen oder Suspensionen der Extrakt-Bestandteile in einem Lösungsmittel/Suspensionsmittel vorliegen. Die Konzentration der Extrakt-Bestandteile kann beispielsweise 1 g/l bis 50 g/l, beispielsweise 5 g/l bis 20 g/l, wie 5 g/l, 10 g/l, 15 g/l und 20 g/l betragen.

In einer Ausführungsform kann das zumindest teilweise Entfernen des Lösungsmittels durch ein Verfahren erfolgen, ausgewählt unter Gefrier-, Sprüh-, Band-, Walzen-, Wärme- und Vakuumkonzentrierung und -trocknung. Zudem können etwaig vorhandenes Wasser oder anderen Feuchtebestandteilen entfernt werden.

In einer Ausführungsform zur Gewinnung des Apfelextrakts kann der Reststoff aus der Apfelwirtschaft und -verarbeitung auf ein Absorberharz aufgetragen und davon eluiert werden und vom Eluat zumindest teilweise das Elutionsmittel entfernt werden, beispielsweise mit den vorstehend beschriebenen Verfahren.

Gegenstand der vorliegenden Erfindung ist ferner ein Pestizid, umfassend mindestens zwei fungizide Komponenten, wovon (a) eine aus der Gruppe der Pflanzenschutzmittel, insbesondere aus der Gruppe der kupferhaltigen Pflanzenschutzmittel, z. B. in einer Menge von 1 bis 99 g/100 ml (insbesondere 25 bis 50 g/100 ml) ausgewählt ist und (b) die andere einen Extrakt aus Reststoffen des Weinbaus und/oder einen Apfelextrakt z. B. in einer Menge von 1 bis 99 g/100 ml (insbesondere 50 bis 75 g/100 ml) aufweist.

In einer Ausführungsform kann der Extrakt aus Reststoffen des Weinbaus, der aus Rebholz gewonnen wird, und/oder Apfelextrakt formuliert sein oder als Rohextrakt vorliegen. Der Extrakt wird insbesondere als formuliert betrachtet, wenn die Zugabe von mindestens einem der o.g. Hilfsstoffe wie Ligninsulfonat, Stabilisatoren (Antioxidantien, UV-Stabilisatoren), pH-Regulatoren und/oder Benetzungshilfsmitteln erfolgte.

In einer weiteren Ausführungsform können in diesem Pestizid weiterhin fungizid-wirkende Bestandteile z. B. in einer Menge von 1 bis 99 g/100 ml (insbesondere 50 bis 90 g/100 ml), Formulierungshilfsstoffe z. B. in einer Menge von 1 bis 99 g/100 ml (insbesondere 10 bis 70 g/100 ml), und/oder Stabilisatoren z. B. in einer Menge von 1 bis 99 g/100 ml (insbesondere 1 bis 10 g/100 ml) vorliegen.

Der Rebholz- bzw. Apfelextrakt kann beispielhaft wie folgt hergestellt werden.

Rebholz, z. B. der Sorten Pinot Noir oder Accent von *Vitis vinifera* L., kann optional geschnitten, dann gehäckselt und ggf. für bis zu sechs Monate lang bei Raumtemperatur bis zur Gewichtskonstanz getrocknet werden. Dem Fachkundigen ist bekannt, dass eine Lagerung und Trocknung zu einer Steigerung der enthaltenen Stilbenoide führen kann.[20]Anschließend kann das Material auf eine durchschnittliche Partikelgröße von etwa kleiner 3,0 mm gemahlen werden. Die Extraktion kann durch Vermengen des Rebholzmaterials mit einem Lösungsmittel, z. B. wässrigem Ethanol (z. B. ca. 80 ml/100 ml, Feststoff-Lösungsmittel-Verhältnis z. B. 1g/5ml), und optionalem Rühren oder sonstiger Durchmischung, z. B. für ca. vier Stunden bei etwa Raumtemperatur ggf. ohne Lichteinwirkung, erfolgen. Danach kann das Lösungsmittel teilweise entfernt werden, z. B. durch Verdampfung, z. B. auf ca. 15 % Gesamtfeststoffkonzentration. Danach kann der Rohextrakt mit einem Ligninsulfonat, beispielsweise einem Natrium-Ligninsulfonat (z. B. im Verhältnis 30 g/70 g Ligninsulfonat zu Extraktfeststoff) versetzt und dann einem Sprühtrockner (z. B. Büchi B-290, Flawil, Schweiz) zugeführt werden, der beispielsweise mit einer Lufteintrittstemperatur von ca. 150 °C, einer Austrittstemperatur von 80-82 °C, einer Zuführungsrate von ca. 8 ml/min und einem Luftdurchsatz von ca. 5500 l/h betrieben werden kann. Es versteht sich, dass bei industrieller Herstellung die Durchsätze erheblich größer wären.

Der Apfelextrakt kann hergestellt werden, indem ein Absorberharzsäulensystem auf Styrol-Divinylbenzol-Copolymer-Basis, mit z. B. Apfelsaft (cv. Boskoop, ca. 100 kg Saft) beladen, die Säule mit Wasser gespült und anschließend die absorbierten Polyphenole mit Ethanol (z. B. 96 ml/100 ml) eluiert werden. Die Entfernung des Lösungsmittels kann z. B. durch Verdampfung des Lösungsmittels unter vermindertem Druck und erhöhter Temperatur (z. B. bei ca. 50 °C) erfolgen. Anschließend kann der Rohextrakt zu einem pulverförmigen Apfelextrakt getrocknet werden, z. B. durch Gefriertrocknung oder Sprühtrocknung, ggf. unter Verwendung von Hilfsstoffen, wie z. B. Maltodextrin.

Gegenstand der vorliegenden Erfindung ist ferner ein Verfahren zur Herstellung der Pestizide wie sie vorstehend beschrieben wurden, wobei der Extrakt aus Reststoffen des Weinbaus und/oder der Apfelextrakt gewonnen werden durch Behandlung des Rebholzes bzw. der Reststoffe aus der Apfelwirtschaft und - verarbeitung mit einem Lösungsmittel und anschließender zumindest teilweiser Entfernung des Lösungsmittels, wodurch ein Rohextrakt erhalten wird, zu dem gegebenenfalls weitere Bestandteilen, wie Ligninsulfonat und/oder kupferbasierte Pflanzenschutzmittel zugegeben werden können. Zur Durchführung des Verfahrens wird in vollem Umfang auf die bereits vorstehend gemachten Ausführungen verwiesen.

Gegenstand der Erfindung ist ferner die Verwendung der Pestizide, wie sie vorstehend beschrieben wurden, zur Bekämpfung von als lästig oder schädlich angesehene Lebewesen, Viren und Viroiden, beispielsweise zur Bekämpfung des Falschen Mehltaus der Weinrebe (*Plasmopara viticola*).

In einer Ausführungsform kann die Verwendung im ökologischen Landbau oder in der integrierten Landwirtschaft erfolgen.

In einer Ausführungsform kann der Extrakt aus Reststoffen des Weinbaus gleichzeitig oder zeitlich versetzt entweder mit einem Fungizid, insbesondere mit einem kupferbasierten Wirkstoff, und/oder einem Apfelextrakt eingesetzt werden.

Mit den erfindungsgemäßen Pestiziden kann die fungizide Wirksamkeit von Extrakten aus Reststoffen des Weinbaus verstärkt werden, insbesondere mit den folgenden Schritten: (a) Die Applikation der Pestizide, ungeachtet der Ausbringungsart sowie (b) die gleichzeitige oder zeitlich versetzte Applikation eines Extrakts aus Reststoffen des Weinbaus (formuliert oder als Rohextrakt) mit einem Apfelextrakt.

Die Nutzung der vorgestellten Formulierungen ist über den ökologischen (und integrierten) Weinbau hinaus denkbar, und zwar vor allem in Kulturen, in denen ebenfalls kupferhaltige Pflanzenschutzmittel im Rahmen der ökologischen (und integrierten) Pflanzenproduktion zum Einsatz kommen: z. B. gegen Apfelschorf im Obstbau, Kraut- und Knollenfäule in Kartoffeln und Tomaten sowie gegen Falschen Mehltau in Hopfen. Diese Vorgehensweise steht im Einklang mit den Forderungen des Europäischen "Green Deals" (Halbierung des Pflanzenschutzmittel-Einsatzes und Ausweitung der ökologischen Produktion) und berücksichtigt zudem die "Waste-Prevention-Initiative" [www.food.ec.europa.eu/horizontal-topics/farm-fork-strategy_en].

Die Erfindung wird nachfolgend unter Bezugnahme auf die Beispiele näher veranschaulicht, wobei ausdrücklich darauf hingewiesen wird, dass die Beispiele nicht so zu verstehen sind, dass die Erfindung darauf beschränkt wird. In den Figuren wird folgendes gezeigt:

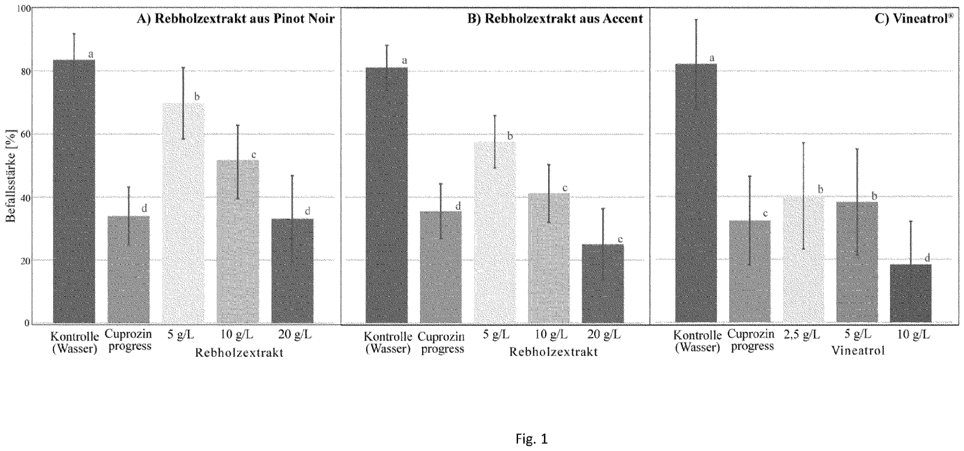

Figur 1     Befall der Blätter von jeweils 15 Topfreben mit Falschem Mehltau unter Gewächshausbedingungen nach Behandlung mit Rebholzextrakten der Sorten Pinot Noir (A) und Accent (B), mit Vineatrol® (C) sowie mit Wasser (Kontrolle) und Cuprozin progress® (kupferhaltiges Standardpräparat) als Positiv-Kontrolle bzw. Vergleichsmittel. Die befallene Blattfläche nimmt mit zunehmender Konzentration des applizierten Rebholzextrakts ab und ist bei 20 g/L Rebholz-Extrakt vergleichbar mit der der Kupfer-Behandlung (beide Sorten) und 10 g/L im Falle der Prüfsubstanz Vineatrol®. Unterschiedliche Buchstaben weisen auf statistisch signifikante Unterschiede der Mittelwerte bei p < 0,05 hin (ANOVA, post-hoc Tukey-Test).

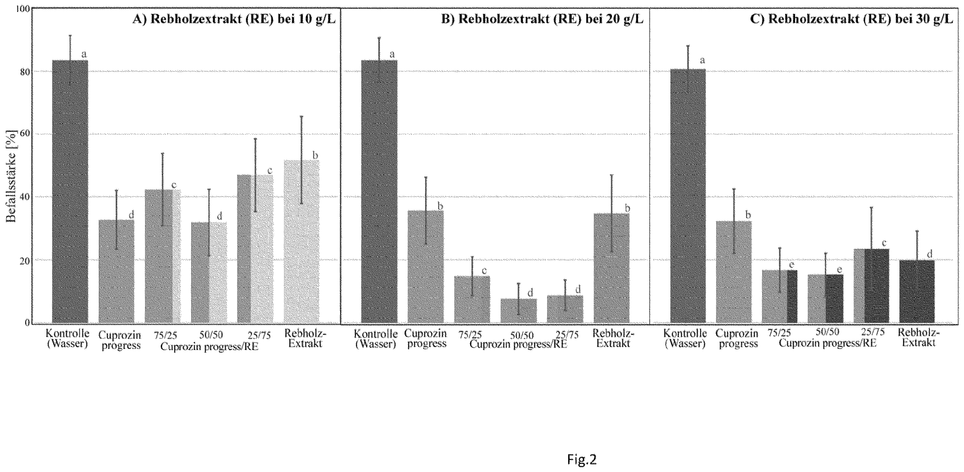

Figur 2     Blattbefall durch *P. viticola* an jeweils 15 Topfreben nach Behandlung mit Cuprozin progress® und Rebholzextrakten (cv. Pinot Noir) zu 10 g/L (A), 20 g/L (B) und 30 g/L (C) sowie Mischungen in unterschiedlichen Verhältnissen dieser Wirkstoffe sowie Wasser als Positivkontrolle unter Gewächshausbedingungen. Bei Mischungen von Cuprozin progress® mit Rebholz-Extrakt in einer Konzentration von 20 g/L waren die Hemmwirkungen signifikant stärker als bei der alleinigen Anwendung, was auf eine synergistische Wirkung der beiden Wirkstoffe hinweist (vgl. Tab. 2). Unterschiedliche Buchstaben kennzeichnen signifikante Unterschiede der Mittelwerte bei $p < 0,05$ (ANOVA, post-hoc Tukey-Test).

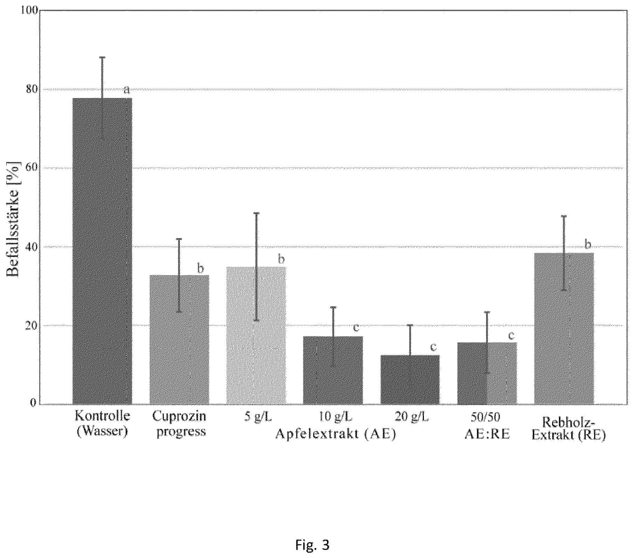

Figur 3    Befall der Blätter von Topfreben mit Falschem Mehltau nach Behandlung mit Apfelextrakt zu 5, 10 und 20 g/L und Rebholzextrakt aus der Sorte Pinot Noir zu 20 g/L bzw. einer Kombination aus diesen (50/50 von 10 g/L Apfelextrakt und 20 g/L Rebholzextrakt) sowie Wasser (Kontrolle) und Cuprozin progress® als Positivkontrolle bzw. Vergleichsmittel. Der Befall der Blätter nahm mit zunehmender Konzentration des Apfelextrakts ab. Bei einer Apfelextraktdosis von 5 g/L war die Wirksamkeit mit der der Kupferbehandlung vergleichbar. Die Kombination von Apfelextrakt Rebholzextrakt zeigte eine additive, antifungale Wirkung. Unterschiedliche Buchstaben weisen auf signifikante Unterschiede der Mittelwerte bei $p < 0,05$ hin (ANOVA, post-hoc Tukey-Test).

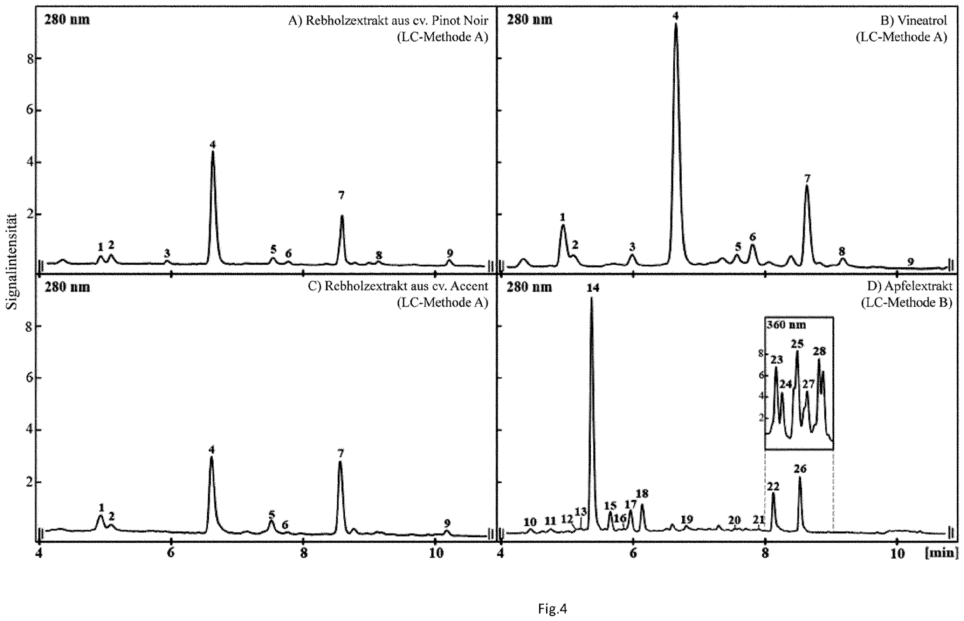

Figur 4    HPLC-DAD-Chromatogramme bei 280 nm für beispielhaft hergestellte Rebholzextrakte der Rebsorten Pinot Noir (A) und Accent (B) und das kommerziell erhältliche Vineatrol® (C) nach Injektion der identisch verdünnten Extrakte sowie ein Chromatogramm eines beispielhaft hergestellten Apfelextrakts bei 280 nm und 360 nm (D). Peak-Zuordnung: (1) Ampelopsin A, (2) Piceatannol, (3) Pallidol, (4) Resveratrol, (5) Hopeaphenol, (6) Isohopeaphenol, (7) ε-Viniferin, (8)ω-Viniferin, (9) Vitisin B, (10) Procyanidin B1, (11) Catechin, (12) Coumaroylhexose, (13) Kryptochlorogensäure, (14) Chlorogensäure, (15) Procyanidin B2, (16) Feruloylhexose, (17) Epicatechin, (18) 4-O-p-Cumaroylchinasäure, (19) Procyanidin C1, (20) 3-Hydroxyphloretin 2'-O-xylosylglucosid, (21) 3-Hydroxyphloretin 2'-Oglucosid, (22) Phloretin 2'-O-xyloglucosid, (23) Quercetin-3-O-Galactosid, (24) Quercetin-3-O-Glucosid, (25) Quercetin-3-O-Xylosid, (26) Phlorizin, (27) Quercetin-3-O-Arabinosid und (28) Quercetin-3-O-Rhamnosid.

## Beispiel 1

### Chemikalien:

Für die antimykotischen Untersuchungen diente Cuprozin progress® (auf Basis von Kupferhydroxid) als Vergleichssubstanz und wurde von der Fa. Certis Europe BV (Hamburg, Deutschland) bezogen. Vivando® wurde von der Fa. BASF SE (Ludwigshafen, Deutschland) bezogen. Vineatrol® wurde von Actichem (Montauban, Frankreich) bezogen und stellt einen Pflanzenextrakt dar, der aus Cabernet Sauvignon- und Merlot-Rebtrieben aus der Region Bordeaux (Frankreich) gewonnen wird und in einer pulverförmigen Formulierung mit Maltodextrin vorliegt.[19] Weitere Einzelheiten zu den in dieser Studie verwendeten Chemikalien finden sich im Beispiel 2, unten.

### Herstellung von phenolreichen Rebholz- und Apfelextrakten:

Rebholz der Sorten Pinot Noir und Accent von *Vitis vinifera* L. wurde im Dezember 2020 in Geisenheim (Deutschland) geschnitten, dann gehäckselt und sechs Monate lang bei Raumtemperatur bis zur Gewichtskonstanz getrocknet, um eine Steigerung der Stilbenoid-Gehalte nach dem Schnitt zu erzielen.[20] Anschließend wurde das Material auf eine durchschnittliche Partikelgröße von ca. 1 mm vermahlen (Fritsch Pulverisette 19, Idar-Oberstein, Deutschland). Die Extraktion erfolgte durch kontinuierliches Rühren des Rebholzmaterials in denaturiertem, wässrigem Ethanol (80 ml/100 ml., Feststoff-Lösungsmittel-Verhältnis 1 g/5 ml) für vier Stunden bei Raumtemperatur ohne Lichteinwirkung im technischen Maßstab (30 kg Rebholz pro Extraktionsansatz), wie zuvor von Besrukow et al.[21] beschrieben. Nach der Ver-dampfung des Lösungsmittels auf ca. 15 % Gesamtfeststoffkonzentration (Heidolph Hei-VAP Industrial, Schwabach, Deutschland) wurde der Rohextrakt mit Natrium-Ligninsulfonat (Verhältnis 30 g/70 g Ligninsulfonat zu Extraktfeststoff) versetzt und dann einem Sprühtrockner im Labormaßstab (Büchi B-290, Flawil, Schweiz) zugeführt, der mit einer Lufteintrittstemperatur von 150 °C, einer Austrittstemperatur von 80-82 °C, einer Zuführungsrate von 8 ml/min und einem Luftdurchsatz von 5500 l/h arbeitet.

Der Apfelextrakt wurde hergestellt, indem ein Absorberharzsäulensystem (PI 200/750 VOE-AB-FOG, Kronlab, Schermbeck, Deutschland), das ein Styrol-Divinylbenzol-Copolymer (SEPABEADS™ SP70 Mitsubishi Chemicals, Chiyoda, Japan) enthielt, mit Apfelsaft (cv. Boskoop, ca. 100 kg Saft) beladen, die Säule mit Wasser gespült und anschließend die absorbierten Polyphenole mit Ethanol (96 ml/100 ml) eluiert wurden. Nach Verdampfung des Lösungsmittels unter vermindertem Druck bei 50 °C wurde der Rohextrakt schließlich gefriergetrocknet (Beta 2-8 LD plus, Martin Christ, Osterode, Deutschland), um den in dieser Studie verwendeten pulverförmigen Apfelextrakt zu erhalten. Es versteht sich, dass der Apfelextrakt optional mit Hilfsstoffen (bspw. Maltodextrin, Ligninsulfonat, Antioxidantien, UV-Stabilisatoren, pH-Regulatoren) versetzt werden kann.

**HPLC-Analysen:**

HPLC-DAD-Analysen von Stilbenoiden in Rebholzextrakten wurden wie von Besrukow et al.[21] beschrieben durchgeführt, mit einigen Modifikationen, unter Verwendung von 0,1 ml/100 ml wässriger Ameisensäure und Acetonitril für die Gradientenelution auf einer Hypersil Gold RP-C18 Säule bei 40 °C. Ebenso wurden die im Apfelextrakt vorhandenen phenolischen Verbindungen durch UPHLC-DAD nach Trennung auf einer Luna Omega RP-C18-Säule bei 40 °C unter Verwendung von 2 ml/100 ml wässriger Ameisensäure und Acetonitril/Ameisensäure (98 ml/2 ml) als Eluenten charakterisiert. Weitere Einzelheiten zur Methodik sind im Beispiel 2, unten, beschrieben.

**Antimykotische Tests gegen *P. viticola*:**

**Laborversuche:**

Erste Bewertungen der antimykotischen Aktivität von Rebholzextrakten auf *P. viticola* wurden *in vitro* durch Untersuchungen zur Zoosporenfreisetzung sowie im Rahmen von Motilitätstests nach einer zuvor beschriebenen Methode mit leichten Modifikationen durchgeführt.[22] Insbesondere wurde ein sog. Sporangienrasen durch Übertragung von *P. viticola*-Sporangien, die auf frisch geernteten Rebblättern vorlagen, auf eine Wasseragar-Oberfläche in einer Petrischale hergestellt. Danach wurden 50 $\mu$L des Rebholzextraktes der Rebsorte Pinot Noir oder Accent (5, 10 bzw. 20 g/L) oder Vineatrol® (2,5, 5 und 10 g/L) auf die Platte getropft. Ebenso wurden 50 $\mu$L Tropfen Cuprozin progress® in Wasser (3,2 mL/L) sowie reines Wasser als Vergleichsmittel bzw. Positivkontrolle verwendet. Anschließend erfolgte die Inkubation für vier Stunden im Dunkeln bei 25 °C. Die Zoosporenmotilität, die durch visuelle Bewertung mittel Stereolupe als normal, reduziert oder vollständig beeinträchtigt eingeschätzt wurde, sowie die Zoosporenfreisetzung (Freisetzungsrate), die durch die Ermittlung der Anzahl leerer Sporangien gegenüber noch gefüllten Sprorangien in einer Stichprobe von 100 betrachteten Sporenbehältern berechnet wurde, wurden stündlich unter dem Lichtmikroskop beobachtet. Jede Behandlung wurde dreimal wiederholt. Der Mittelwert (%) ± Standardabweichung der Freisetzungsrate nach jeder Behandlung wurde berechnet.

**Versuche im Gewächshaus:**

Fünfzehn Topfreben pro Behandlung (cv. Riesling, Entwicklungsstadium BBCH 16-19, vorbehandelt mit Vivando® gegen Echten Mehltau) wurden mit 250 ml (d. h. 155 l/ha) der jeweiligen Behandlungslösung mit dem SprayLab-Applikationsgerät (Schachtner, Ludwigsburg, Deutschland),[33] einer Miniaturnachbildung eines im Weinbau üblichen pneumatischen Applikationsgeräts, besprüht. Als Behandlungslösungen wurden Wasser (Kontrolle), eine wässrige Lösung mit 3,2 mL Cuprozin progress® pro L (≙ ca. 500 mL Cuprozin progress/ha ≙ 124 g Reinkupfer/ha) und die Rebholzextrakte mit 5, 10 und 20 g pro L wässriger Applikationslösung verwendet. Die gleichen Konzentrationen wurden für den Apfelextrakt benutzt, während Vineatrol® in einer Dosierung von 2,5, 5 und 10 g pro Liter appliziert wurde. Für die Interaktionsstudien wurde die Cuprozin progress®-Lösung teilweise (25 ml/100 ml, 50 ml/100 ml oder 75 ml/100 ml) durch die Lösung mit dem cv. Pinot Noir-basiertem Rebholzextrakt in einer Konzentration von 10, 20 und 30 g/L ersetzt. Parallel dazu wurde die antimykotische Wirkung einer kupferfreien Mischung, die den Rebholzextrakt der Sorte Pinot Noir- und dem Apfelextrakt in einer Konzentration von 10 g/L (Verhältnis 50:50) getestet. Schließlich wurden wässrige Lösungen der Hilfsstoffe Natriumligninsulfonat und Maltodextrin allein (d. h. ohne die vorgenannten fungiziden Komponenten) in einer Konzentration von 10 g/L eingesetzt.

Einen Tag nach der Behandlung wurden die Blattunterseiten von fünf Blättern jeder Topfrebe mit einer frisch zubereiteten *P. viticola*-Sporangiensuspension ($10^5$ Sporangien/mL) inokuliert, die zuvor von Topfreben (*V. vinifera* cv. Riesling) durch Abwaschen der Sporangien aus einem frischen Sporangienrasen der Blattunterseiten mehrerer Topfrebenblätter mit deionisiertem Wasser gewonnen worden war. Die beimpften Topfreben wurden 24 Stunden lang mit einer dunklen Plastikfolie abgedeckt, um ein günstiges Mikroklima für die Infektion und die Entwicklung der Krankheit zu schaffen. Nach der Randomisierung und einer siebentägigen Kultivierung im Gewächshaus wurden die Pflanzen mittels Schlauchs mit ca. 20 ml/Pflanze gewässert und erneut über Nacht für zwölf Stunden mit einer dunklen Plastikfolie abgedeckt, um die Sporulation zu induzieren. Die sog. Befallsstärke wurde danach mittels Bonitur visuell erfasst, indem der relative Anteil (in %) der von einem Sporangienrasen bedeckten Blattfläche der Blattunterseite geschätzt wurde.[23] Die sog. Befallshäufigkeit wurde als Anzahl der Rebblätter mit sichtbarem Sporangienrasen geteilt durch die Gesamtzahl der Blätter der Stichprobe berechnet und in Prozent ausgedrückt.

**Statistische Auswertung:**

Die statistische Verarbeitung der Ergebnisse erfolgte in Excel 2019 (Microsoft, USA). Die Ergebnisse werden als Mittelwerte ± Standardabweichung ausgewiesen, sofern nicht anders angegeben. Signifikante Mittelwertunterschiede wurden mittels ANOVA unter Anwendung des Post-hoc-Tukey-Tests bewertet.

Synergistische Effekte wurden aus der theoretisch erwarteten antimykotischen Aktivität der Mischung ($a_{Cexp}$) und der tatsächlich beobachteten antimykotischen Aktivität ($a_{Cobs}$) nach der Formel von Abbott[24] wie folgt berechnet. Zunächst wurde die theoretisch erwartete antimykotische Aktivität der Mischung ($a_{Cexp}$) nach Gl. 1 berechnet:

$$a_{C_{exp}} = a_A + a_B - \left(\frac{a_A \times a_B}{100}\right) \qquad \text{(Gl. 1)}$$

wobei $a_{Cexp}$ die theoretisch erwartete Aktivität darstellt, $a_A$ die beobachtete Aktivität der Komponente A ist und $a_B$ die beobachtete Aktivität der Komponente B ist.

Die beobachteten Aktivitäten stellen den Blattbefall der Mischung im Verhältnis zu dem der mit Wasser behandelten Kontrolle dar (
$\triangleq 1 - \left(\frac{Befallsniveau\ (Behandlung\ mit\ Komponente\ A\ oder\ B)}{Befallsniveau\ (Wasserbehandlung)}\right)$
).

Anschließend wurde der Synergiefaktor (SF) nach Gl. 2 berechnet:

$$SF = \frac{a_{C_{obs}}}{a_{C_{exp}}} \qquad \text{(Gl. 2)},$$

wobei $a_{Cobs}$ die beobachtete antimykotische Aktivität ist ($\triangleq$
$1 - \left(\frac{IBefallsniveau\ (Behandlung\ mit\ Komponente\ A\ oder\ B)}{Befallsniveau\ (Wasserbehandlung)}\right)$
) und $a_{Cexp}$ die gemäß Gl. 1 erwartete Aktivität ist. Die sich ergebenden SF zeigten synergistische (SF>1), additive (SF≈1) oder antagonistische (SF<0,75) Effekte an.[24]

**Ergebnisse und Diskussion:**

**Freisetzung von Zoosporen im Labor:**

Bei der Ätiologie des Falschen Mehltaus spielen die Freisetzung der Zoosporen von *P. viticola* aus den Sporangien und die sich anschließende Infektion von anfälligem Wirtsgewebe über das Eindringen des Pilzes durch die Spaltöffnungen eine Schlüsselrolle für die Krankheitsentwicklung.[25] Daher wurde die hemmende Wirkung von stilbenoidreichen Rebholzextrakten auf die Freisetzung und Beweglichkeit von *P. viticola*-Zoosporen untersucht und ihr antimykotisches Potenzial bei verschiedenen Konzentrationen *in vitro* bewertet.

Wie aus Tabelle 1 hervorgeht, wurden 97,3 % der mit Wasser (Kontrolle) behandelten Zoosporen nach vier Stunden Inkubation freigesetzt und zeigten eine normale Beweglichkeit. Dagegen wurden Freisetzung und Motilität der ausgezählten Zoosporen vollständig gehemmt, wenn das kupferhaltige Pflanzenschutzmittel appliziert wurde. Der auf Ligninsulfonat basierende Rebholzextrakt der Rebsorte Pinot Noir reduzierte generell die Zoosporenmotilität. Darüber hinaus verringerte er die Freisetzung von Zoosporen auf 57,3 % bei 5 g Extrakt pro L Behandlungslösung ($\triangleq$ 0,5 g Gesamtstilbenoide/L), auf 33,7 % bei 10 g/L ($\triangleq$ 1,0 g Stilbenoide/L) und auf 2,0 % bei 20 g/L ($\triangleq$ 2,0 g Stilbenoide/L). Beim Rebholzextrakt der Sorte Accent führten niedrig dosierte Behandlungen zu 43,0 % (bei 5 g/L, $\triangleq$ 0,4 g Stilbenoide/L) und 11,7 % (bei 10 g/L, $\triangleq$ 0,9 g Stilbenoide/L) entleerter Sporangien, während die Freisetzung von Zoosporen bei der höchsten Konzentration (20 g/L, $\triangleq$ 1,8 g Stilbenoide/L) vollständig gehemmt war. Ebenso wurde bei der höchsten verwendeten Konzentration von Vineatrol® (10 g/L, $\triangleq$ 3,6 g Stilbenoide/L) eine komplette Unterbindung der Freisetzung von Zoosporen beobachtet, während die Freisetzung von Zoosporen bei 5 g/L und 2,5 g/L 15,7 % bzw. 24,7 % betrug (Tab. 1). Die Gesamtphenolmengen betrugen 12,4 % und 10,7 % für die Rebholzextrakte der Rebsorten Pinot Noir und Accent bzw. 36,6 % für Vineatrol®. Die Anwendung der Hilfsstoffe Maltodextrin (92,2 ±3,0 % Freisetzungsrate) und Na-Ligninsulfonat (91,3 ±4,7 %) zeigte keine signifikante Hemmwirkung auf die Freisetzung von Zoosporen und hatten ebenso keinen Einfluss auf die Motilität der Zoosporen im Vergleich zur Wasserkontrolle (Tab. 1).

Tabelle 1: Freisetzungsrate und Motilität von Zoosporen aus Sporangien von P. viticola vier Stunden nach Behandlung mit Cuprozin progress®, Rebholzextrakten der Sorten Pinot Noir und Accent sowie Vineatrol® in verschiedenen Konzentrationen, wobei die Mittelwerte von drei Versuchen in % ± Standardabweichung angegeben sind.

| | Kontrolle (Wasser) | Cuprozin progress[a] | Rebholzextrakt aus cv. Pinot Noir[b] | | | Rebholzextrakt aus cv. Accent[c] | | | Vineatrol[d] | | |
|---|---|---|---|---|---|---|---|---|---|---|---|
| | | | 5 | 10 (g/L) | 20 | 5 | 10 (g/L) | 20 | 2,5 | 5 (g/L) | 10 |
| **Zoosporen- motilität** | normal | keine | redu-ziert | redu-ziert | keine | redu-ziert | kei- ne | keine | redu-ziert | kei- ne | keine |
| **Zoosporen- Freisetzung = leere Sporangien in %** | 97,3 t1,2 | 0 | 57,3 t2,3 | 33,7 ±4,5 | 2,0 ±3,5 | 43,0 ±5,3 | 11,7 ±6,5 | 0 | 24,7 t3,5 | 15,7 ±2,1 | 0 |

[a] ≙ 0,8 g reines Kupfer/L, [b] ≙ 0,5 g reine Stilbenoide/L bei 5 g/L Extraktverwendung, [c] ≙ 0,4 g reine Stilbenoide/L bei 5 g/L Extraktverwendung, [d]¶ ≙ 1,8 g reine Stilbenoide/L bei 5 g/L Vineatrol®-Verwendung

Diese Ergebnisse bestätigen Beobachtungen aus zurückliegenden Studien, in denen frühere, jedoch nicht-ligninsulfonatbasierte Rebholzextrakte die Freisetzung von Zoosporen in Abhängigkeit von der verwendeten Konzentration gehemmt hatten.[17] Richard et al. berichteten jedoch, dass eine vollständige Hemmung bei allgemein niedrigeren Konzentrationen (0,3 g/L, d. h. 0,1 g Gesamtstilbenoide/L) als in vorliegender Studie (10 g/L für Vineatrol®, d. h. 3,6 g Gesamtstilbenoide/L und 20 g/L für den ligninsulfonatbasierten Rebholzextrakt von cv. Accent, d. h. 1,8 g Gesamtstilbenoide/L) erreicht wurde. Es kann angenommen werden, dass diese unterschiedlichen Ergebnisse wie folgt erklärt werden können. Erstens wurde die Sporangiendichte in vorliegendem Versuch höher angesetzt ($1 \times 10^5$ Sporangien/ml) als in dem von Richard et al. ($0,5 \times 10^5$ Sporangien/ml), um mit Blick auf die nachfolgend durchgeführten Untersuchungen an Topfreben einen hohen Krankheitsdruck zu reproduzieren, was in der Folge höhere Konzentrationen an Stilbenoiden zur Hemmung der Zoosporenfreisetzung erforderlich machte. Zweitens wurde beim Dispergieren aller Prüfmittel, d.h. inkl. der ligninsulfonatbasierten Rebholzextrakte, in Wasser auf die Zugabe von Lösungsmitteln wie Aceton verzichtet, welches Richard et al. zur Verbesserung der Lösung der Stilbenoide in ihren nicht-ligninsulfonatbasierten Rebholzextrakten verwendet hatten. Folglich könnte der Gehalt an in der Formulierung gelöst vorliegenden Stilbenoiden - insbesondere an schwer wasserlöslichen Oligostilbenoiden - in der vorliegenden Studie geringer gewesen sein. Hervorzuheben ist dabei, dass die Verwendung von Lösungsmitteln wie Aceton die Anwendung in der landwirtschaftlichen Praxis - vor allem im Öko-Landbau - erschweren würde. Die Produktionskosten für das Endprodukt würden sich erhöhen und eine Zulassung für den ökologischen Landbau wäre fraglich. Bei der Verwendung der vorliegenden ligninsulfonatbasierten Rebholzextrakte zur Erreichung einer relevanten Wirksamkeit bestehen diese Bedenken nicht.

Wie aus Tabelle 1 hervorgeht, war das auf Maltodextrin basierende Vineatrol® bei niedrigeren Dosierungen wirksamer als der mit Ligninsulfonat formulierte Rebholzextrakt, was vermutlich auf den höheren Gesamtgehalt an Stilbenoiden in Vineatrol® zurückzuführen ist. In den hier beispielhaft hergestellten Rebholzextrakten sowohl aus Pinot Noir als auch Accent war der Stilbenoidgehalt mehr als dreimal niedriger als in Vineatrol® (vgl. Beispiel 2, unten, Tab. 3). Infolgedessen wurden nach der Behandlung mit Rebholzextrakten der Rebsorten Pinot Noir und Accent mehr leere Sporangien gezählt (57,3 % bzw. 43,0 %) als nach der Behandlung mit Vineatrol® (15,7 %) bei gleicher Dosierung (5 g/L).

Vineatrol® ist ein Pflanzenextrakt, der aus Rebholz der Rebsorten Cabernet Sauvignon und Merlot (Weinanbaugebiet Bordeaux, Frankreich) gewonnen wurde und derzeit mit Maltodextrin formuliert wird.[17,19] Beide Rebsorten sind für ihren hohen Gehalt an Stilbenoiden von mehr als 5000 mg/kg Rebholz bekannt.[26] Ähnliche Gehalte (ca. 5700 mg/kg Rebholz) wurden für die Rebsorte Pinot Noir nachgewiesen, welche in der vorliegenden Studie für die Extraktherstellung verwendet wurde.[26] Für Rebholzextrakte aus der Sorte Accent wurden bisher relativ niedrige Gesamtgehalte an Stilbenoiden (1905 mg/kg Rebholz) berichtet, welche jedoch einen vergleichsweise hohen Anteil an Oligo-Stilbenoiden beinhalten.[21] Dies könnte die Unterschiede in der Zoosporenfreisetzung zwischen den Extrakten aus Pinot Noir und Accent erklären. Trotz der geringeren Gesamtmenge an Stilbenoiden war die Hemmung der Freisetzung von Zoosporen bei allen getesteten Konzentrationen stärker, wenn der Extrakt aus der Rebsorte Accent verwendet wurde, was die Beobachtungen von Schnee et al.[15] bestätigen könnte, dass Oligo-Stilbenoide im Vergleich zu Mono-Stilbenoiden wie Resveratrol deutlich bioaktiver sind. Folglich lag der Anteil leerer Sporangien bei Verwendung eines Extraktes aus der Rebsorte Accent in einer Konzentration von 5 g/L bei 43,0 %, während bei gleicher Extraktkonzentration im Falle der Rebsorte Pinot Noir einen Prozentanteil von 57,3 % zu verzeichnen war.

Diese Beobachtungen zur Freisetzung von Zoosporen stimmen mit früheren Arbeiten[27] überein, in denen berichtet wurde, dass die primäre Wirkungsweise von Stilbenoiden in der Hemmung der Freisetzung und Beweglichkeit von Zoosporen besteht, wodurch das Einsenken eines Keimschlauches in die Stomata der Wirtspflanze reduziert oder sogar verhindert wird.

**Gewächshausversuche:**

**Vollständige Substitution von Kupfer durch Rebholzextrakte:**

Bei Topfreben, die mit einem Rebholzextrakt auf Ligninsulfonat-Basis aus der Rebsorte Pinot Noir behandelt wurden, lag die Befallsstärke für 5, 10 bzw. 20 g/L (= 0,5, 1,0 bzw. 2,0 g Gesamtstilbenoide/L) bei entsprechend 69, 52 bzw. 33 % (d. h. 16, 38 bzw. 60 % Krankheitsreduzierung im Vergleich zur Kontrolle, die nur mit Wasser behandelt wurde und eine Befallsstärke von 84 % aufwies. Bei der höchsten verwendeten Konzentration war der Befall vergleichbar mit dem nach Einsatz des kupferhaltigen Standardpräparates (hier: Cuprozin progress) (34 % Befallsstärke, d. h. 59 % Krankheitsreduktion) (Fig. 1-A). In ähnlicher Weise wurde die Befallsstärke durch die Anwendung des Extraktes der Sorte Accent bei den oben genannten Konzentrationen auf 58, 41 und 25 % (d. h. 29 %, 49 % und 69 % Krankheitsreduktion) reduziert (Fig. 1-B).

Bei Vineatrol® betrugen die infizierten Blattflächen 40, 38 und 18 % (d. h. 51, 53 und 77 % Krankheitsreduktion) bei 2,5, 5 und 10 g/L ($\hat{=}$ 0,9, 1,8 und 3,6 g Gesamtstilbenoide/L) (Fig. 1-C). Der Einsatz von Lösungen der Hilfsstoffe Maltodextrin (88 %) und Ligninsulfonat (77 %) allein zeigten keine Wirksamkeit auf das Pilzwachstum.

In allen Versuchen lag die Befallsstärke (= Prozentanteil des mit typischen Läsionen des Schadpilzes bedeckte Blattfläche) auf den Blättern der mit Wasser behandelten Topfreben zwischen 80-90 %. Nach Behandlung mit dem kupferhaltigen Standardmittel betrug sie 32-35 %. Die Krankheitsinzidenz d.h. die Frage, ob der Pilz an den einzelnen Blättern überhaupt vorhanden ist, unabhängig von der individuellen Stärke des Befalls, ermittelt in Form einer "ja/nein"-Aussage (= Befallsstärke; siehe oben), lag bei allen Behandlungen aufgrund des hohen Befallsdrucks (Inokulation mit $10^5$ Sporangien/ml) bei 100 %. Im Rahmen dieses Versuches wurden keine offensichtlichen phytotoxischen Wirkungen beobachtet.

In Übereinstimmung mit den *In-vitro*-Studien zeigten die beiden Rebholzextrakte auf Ligninsulfonat-Basis eine konzentrationsabhängige Hemmung des Befalls mit Falschem Mehltau auf Blättern mit einem Wirkungsgrad, das mit dem im ökologischen Weinbau üblicherweise verwendeten Kupferpräparat vergleichbar war. Die in der vorliegenden Studie beobachtete Krankheitsreduzierung von 51-77 % war etwas geringer als der in der Literatur[17] angegebene Wert für Vineatrol® von ca. 80 % bei 5 g/L (53 % bzw. 77 % bei 5 bzw. 10 g Vineatrol®/L in unserem Experiment). Wie bereits erwähnt, wurde im Falle des ligninsulfonatbasierten Rebholzextraktes kein organisches Lösungsmittel wie Aceton verwendet, um - wie beim Vergleichsmittel Vineatrol® - die Auflösung der Stilbenoide zu verbessern. Ein weiterer Grund für die erwähnte leicht geringere Krankheitsreduzierung in der vorliegenden Studie könnte darin liegen, dass die Topfreben einer extrem hohen Sporangiendichte ausgesetzt waren, was zu einer relativ hohen Befallsstärke führte (80 % Blattbefall im Versuchsglied Kontrolle gegenüber 60 % im Kontrollglied bei Richard et al.[17]) und daher höhere Wirkstoffkonzentrationen für einen vergleichbar hohen Wirkungsgrad erforderlich machte.

Ein weiterer Faktor für die Variabilität der antimykotischen Wirksamkeit könnte in der unterschiedlichen Herkunft der Rebholzextrakte aus verschiedenen Sorten liegen, was letztlich mit den genotypischen Variationen der Stilbenoidprofile zusammenhängt. Frühere Studien berichteten über eine ähnliche antimykotische Aktivität (geprüft in *in-vitro*-Bioassays) für nicht-ligninsulfonat-basierte Rebholzextrakte aus verschiedenen Sorten, die jedoch vergleichbare Profile an Stilbenoiden mit ähnlichen Oligo- oder Polymerisationsgraden aufwiesen.[15] Daher wurden im Rahmen dieser Studie bewusst Rebholzextrakte von zwei verschiedenen Sorten mit unterschiedlichen Profilen untersucht, d. h. (i) Rebsorte Pinot Noir mit ähnlich hohen Anteilen an oligomeren Stilbenoiden (53 %) und (ii) Rebsorte Accent mit höheren relativen Anteilen an oligomeren Stilbenoiden wie z. B. ε-Viniferin (69 %, siehe Tab. 3). Darüber hinaus sind die Pflanzen der Rebsorte Accent in der Praxis für ihre hohe Resistenz gegenüber *P. viticola* bekannt,[28] was vermutlich mit ihrem erhöhten Gehalt an stark antifungalen oligomeren Stilbenoiden zusammenhängt. Neben höheren relativen Anteilen an oligomeren Stilbenoiden wiesen die Extrakte der Rebsorte Accent in der vorliegenden Studie jedoch gleichzeitig niedrigere Gesamt-Stilbenoidgehalte (8,9 g/100 g) im Vergleich zur Rebsorte Pinot Noir (10,3 g/100 g) auf. Dennoch zeigten beide Extrakte in den Gewächshausversuchen eine sehr ähnliche antifungale Aktivität gegenüber *P. viticola* (Fig. 1-A und 1-B). Möglicherweise kompensierte der höhere Anteil an Oligo-Stilbenoiden den insgesamt geringeren Gesamtgehalt an Stilbenoiden in Extrakten der Rebsorte Accent.

**Teilweise Substitution von Kupfer durch Rebholzextrakte (nur Pinot Noir):**

In einer Versuchsreihe zur Charakterisierung potenzieller Wechselwirkungen zwischen dem kupferbasierten Pflanzenschutzmittel Cuprozin progress® und den ligninsulfonatbasierten Rebholzextrakten zeigten die Behandlungen von Topfreben mit dem Rebholzextrakt der Rebsorte Pinot Noir bei einer Dosierung von 10, 20 bzw. 30 g/L eine mittlere Befallsstärke von 52 % (d. h. 38 % Krankheitsreduzierung), 35 % (d. h. 58 % Krankheitsreduzierung) und 20 % (d. h. 75 % Krankheitsreduzierung), was die oben beschriebenen Ergebnisse bestätigt. Auch die alleinige Anwendung des kupferbasierten Pflanzenschutzmittels (Cuprozin progress®) führte zu Befallsstärken zwischen 32-36 % (d. h. 57-61 % Krankheitsreduktion). Im Versuchsglied Kontrolle lag eine Befallsstärke am Blatt von ca. 81-84 % vor sowie eine Befallshäufigkeit von 100 % (Fig. 2). Wie bereits zuvor aufgeführt, wurden keine phytotoxischen Effekte beobachtet.

Mischungen von Cuprozin progress®, welches zu 25 ml/100 ml, 50 ml/100 ml und 75 ml/100 ml durch Rebholzextrakt in der niedrigsten Konzentration, d. h. 10 g/L, ersetzt wurde, zeigten einen mittleren Blattbefall von 42 % (d. h. 49 % Krankheitsreduktion), 32 % (d. h. 62 % Krankheitsreduktion) bzw. 47 % (d. h. 43 % Krankheitsreduktion) (Fig. 2-A). Hier führte die Substitution von Kupfer durch den Pflanzenextrakt zu ähnlichen oder nur geringfügig niedrigeren Krankheitsreduktionsraten (43-62 %) im Vergleich zur Behandlung mit Kupfer allein (57-61 %). Dagegen wurde erwartet, dass die partielle Substitution von Kupfer durch einen wirkungsschwächeren Mischungspartner (hier: Rebholzextrakt) aufgrund der relativ geringen antimykotischen Kapazität, die der zuvor "solo" applizierte Rebholzextrakt in einer Konzentration von 10 g/L (38 % Krankheitsreduktion) zeigte, ein eher schlechteres Resultat erbringen würde.

Wurde der Rebholzextrakt in einer höheren Konzentration von 20 g/L eingesetzt, so verbesserte sich der jeweilige Wirkungsgrad der Kupfer-Rebholzextrakt-Mischungen auf allen Substitutionsstufen (25, 50, 75 % Kupfersubstitution) erheblich, und zwar auf 15 % Befallsstärke (d. h. 82 % Krankheitsreduzierung), 8 % (d. h. 91 % Krankheitsreduzierung) bzw. 9 % (d. h. 90 % Krankheitsreduzierung) (Fig. 2-B). Alle Wirkstoff-Kombinationen führten zu einer signifikant abzusichernden Befallsreduzierung im Vergleich zu den jeweiligen Wirkstoffen allein. Dieses wichtige Ergebnis deutet auf einen synergistischen Effekt hin, der in Form von Synergiefaktoren über 1,0 gezeigt werden konnte (Tab. 2). Hervorzuheben ist, dass der Wirkungsgrad dieser Mischungen im Vergleich zu Cuprozin progress® "solo" oder Rebholzextrakt "solo" sogar um bis zu 30 % erhöht werden konnte (91 % vs. ca. 60 % Krankheitsreduktion gegenüber der Kontrolle) und damit hinsichtlich der biologischen Wirksamkeit gegenüber *P. viticola* auf einem nahezu ähnlich hohen Niveau wie die mehrfach geprüften organisch-synthetischen Vergleichsmittel, die im integrierten Weinbau Anwendung finden, liegt (Ergebnisse hier nicht gezeigt).

Beim Einsatz der höchsten zuvor in Solo-Anwendung getesteten Rebholzextrakt-Konzentration von 30 g/L führte eine weitere Kupfersubstitution mit Rebholzextrakt-Anteilen von 25, 50 und 75 ml/100 ml zu einem Blattbefall von 17 % (d. h. 79 % Krankheitsreduzierung), 15 % (d. h. 81 % Krankheitsreduzierung) bzw. 24 % (d. h. 71 % Krankheitsreduzierung) (Fig. 2-C). Auch hier zeigten die Mischungen im Vergleich zu den Einzelanwendungen eine tendenziell niedrigeren Befallsstärke. Bei dieser höchsten Rebholzkonzentration von 30 g/L schienen die antimykotischen Aktivitäten der jeweiligen Mischungspartner allerdings eher additiv als synergistisch zu wirken, da sich Synergiefaktoren von < 1,0 (hier: um 0,9) (Tab. 2) ergaben. Dieses Resultat könnte darauf zurückzuführen sein, dass der Rebholzextrakt allein mit 30 g/L bereits eine vergleichsweise starke Wirksamkeit (75 % Krankheitsreduktion) aufweist, was zu hohen Zahlenwerten im Nenner ($C_{exp}$) in der Berechnungsformel (Gl. 2) führte.

Tabelle 2: Berechnungen für potentiell synergistische Aktivitäten von Mischungen aus Cuprozin progress® und Rebholzextrakt (Sorte Pinot Noir) bei unterschiedlichen Rebholzextrakt-Konzentrationen und verschiedenen Mischungsverhältnissen. Synergistische Aktivitäten werden durch einen Synergiefaktor (SF) von > 1,0 angezeigt. Ein Synergiefaktor von < 1,0 kennzeichnet additive Effekte.

| Experiment nach Fig. 2[‡] | Befallsstärke [%] | | | Beobachtete antifungale Aktivität [%] ($C_{obs}$) | | | Erwartete antifungale Aktivität [%] $C_{exp}$[†] | | | Synergiefaktor ($C_{obs}/C_{exp}$) | | |
|---|---|---|---|---|---|---|---|---|---|---|---|---|
| | A | B | C | A | B | C | A | B | C | A | B | C |
| Kontrolle (Wasser) | 84 | 84 | 81 | - | - | - | - | - | - | - | - | - |
| Cuprozin progress® solo[§] | 33 | 36 | 32 | 61 | 57 | 60 | - | - | - | - | - | - |
| Rebholzextrakt solo | 52 | 35 | 20 | 38 | 58 | 75 | - | - | - | - | - | - |
| Cuprozin progress® / Rebholzextrakt (75/25) | 42 | 15 | 17 | 49 | 82 | 79 | 76 | 82 | 90 | 0,65 | 1,00 | 0,88 |
| Cuprozin progress® / Rebholzextrakt (50150) | 32 | 8 | 15 | 62 | 91 | 81 | 76 | 82 | 90 | 0,82 | 1,11 | 0,90 |
| Cuprozin progress® / Rebholzextrakt (25175) | 47 | 9 | 24 | 43 | 90 | 71 | 76 | 82 | 90 | 0,58 | 1,09 | 0,79 |

[†]: Berechnet nach der Formel von Abbott[24], [§]: Kupferdosis bleibt in allen Versuchen konstant.

[*]: Die Versuche unterscheiden sich in den eingesetzten Konzentrationen des Rebholzextrakts (cv. Pinot Noir) nach Fig. 2. Der Extrakt wurde verwendet bei (A) 10 g/L, (B) 20 g/L, and (C) 30 g/L.

Generell wirken Fungizide auf Kupferbasis als sogenannte Kontaktmittel. Das bedeutet, dass sie nach Applikation eine antimykotische Schutzschicht auf Pflanzenoberflächen bilden und dadurch das Eindringen des Erregers in die Pflanze und dessen weitere Entwicklung weitestgehend verhindern. Kupfer als Kontaktfungizid wirkt unspezifisch über einen biochemischen Weg direkt auf den Erreger, nämlich durch die Bildung von Komplexen mit Enzymen, die deren Inaktivierung bewirken und schließlich die allgemeinen Stoffwechselaktivitäten des Pilzes nachhaltig stören.[29] Die erfolgreiche Verhinderung oder zumindest Eindämmung einer Infektion durch pflanzenpathogene Pilze - hier *Plasmopara viticola* - hängt also einerseits von der Wahl und Präsenz des fungiziden Wirkstoffs und andererseits von der Virulenz des pilzlichen Erregers ab. Im Hinblick auf die Ergebnisse der vorliegenden Studie könnte die Hypothese aufgestellt werden, dass die kombinierte Behandlung von Rebholzextrakten mit einem kupferhaltigen Pflanzenschutzmittel (hier: Cuprozin progress®) zu einer höheren Verfügbarkeit von Kupferionen in unmittelbarer Nähe des Schadpilzes oder sogar in den Zellen des Erregers *P. viticola* geführt hat. Verschiedene Mechanismen sind bekannt, die eine solche erhöhte Wirkstoffverfügbarkeit hervorrufen können, z. B. eine Störung der pilzlichen Zellmembranen, eine Blockade der intrazellulären Ionenhomöostase oder eine verringerte Effluxaktivität.[30] Im vorliegenden Fall ist es denkbar, dass eine mögliche Beteiligung der Stilbenoide in der Störung der Zellmembranen von *P. viticola* besteht, wie bereits berichtet wurde.[15] Dies könnte zu einem effizienteren Eindringen der Kupferionen in die Pilzzellen beigetragen haben, was möglicherweise zu den in unserer Studie ermittelten erhöhten Wirkungsgrad beigetragen hat. Darüber hinaus wurde in früheren Studien und anhand der vorliegenden Ergebnisse eine direkte antimykotische Wirkung von Stilbenoiden, insbesondere in Bezug auf die Motilität und die Keimung der Zoosporen, nachgewiesen. Somit könnten Rebholzextrakte einen doppelten Wirkmechanismus gegenüber dem Schadpilz *P. viticola* ausüben, wenn sie gemeinsam mit einem kupferhaltigen Pflanzenschutzmittel angewendet werden, so dass hier möglicherweise insgesamt drei antifungale Mechanismen ihre Wirkung entfalten: (i) die direkte Hemmung der Zoosporenmotilität durch den Mischungspartner Rebholzextrakt und damit die damit verbundene Verhinderung der Zoosporen-Keimung auf den Blättern von Topfreben, (ii) eine zweite direkte Wirkung, nämlich auf der Basis der Bereitstellung von Kupferionen durch den Mischungspartner Cuprozin progress® sowie (iii) die Verstärkung der direkten Wirkung des Mischungspartners Cuprozin progress®, die nur dann wirksam werden kann, wenn beide Mischungspartner zusammenkommen: Erleichterung einer effektiven Introgression von Kupfer in die Pilzzellen, die durch eine mögliche Membranstörung des Rebholzextraktes entsteht. Eine ähnliche Kombination mehrerer Wirkmechanismen wurde kürzlich für die synergistische Wirkung von Kupfernanopartikeln mit dem synthetischen Fungizid Thiophanat-methyl vorgeschlagen, die an *Botrytis cinerea* untersucht wurde.[31]

Darüber hinaus wurde berichtet, dass Stilbenoide als Auslöser für pflanzliche Abwehrreaktionen fungieren[27]. Dies stellt einen möglichen vierten Mechanismus dar, der ebenfalls zu den in unserer Studie beobachteten synergistischen Effekten beigetragen haben könnte.

**Vollständige Substitution von Kupfer durch eine Mischung von Apfelextrakt und Rebholzextrakt:**

Die alleinige Anwendung von Apfelextrakten in einer Konzentration von 5, 10 und 20 g/L auf Topfreben (cv. Riesling) verringerte den Blattbefall auf 35 % (55 % Krankheitsreduzierung), 17 % (78 % Krankheitsreduzierung) bzw. 13 % (84 % Krankheitsreduzierung) im Vergleich zum Blattbefall von 78 % nach einer Wasserbehandlung, die als Kontrolle diente (Fig. 3). Diese Ergebnisse stimmen mit den *in-vitro*-Beobachtungen von Oleszek et al.[11] überein, die von einer signifikanten Hemmung des Wachstums von *Botrytis sp.* bei Exposition gegenüber einem rohen Apfeltresterextrakt berichten und die antimykotische Wirkung auf das Vorhandensein von Quercetin- und Phloretinderivaten zurückführen. In Anbetracht der hohen Mengen dieser Flavonoide im vorliegenden Apfelextrakt (Fig. 3, kombinierte Quercetin- und Phloretinderivate = 65 mg/g Extrakt) und des hohen Schutzniveaus vor der Krankheit bei vergleichsweise niedrigen Konzentrationen des Apfelextrakts (Fig. 3, 55 % Krankheitsreduzierung bei 5 g/L Apfelextrakt), ist anzunehmen, dass diese Verbindungen in den hier präsentierten Untersuchungen als antimykotische Wirkstoffe fungieren.

Äquivalente (50 ml/50 ml) Kombinationen von Rebholz- (20 g/L) und Apfelextrakten (10 g/L) führten zu einer Befallsstärke von 16 % (80 % Krankheitsreduktion). Dieses Untersuchungsergebnis ergab einen Synergiefaktor (SF) von 0,9, was auf eine additive Wirkung der beiden Extrakte hinweist. Sung et al.[32] haben bereits angedeutet, dass Chlorogensäure, die wichtigste phenolische Komponente im Apfelextrakt (211 mg/g Extrakt), antimykotische Wirkungen zeigt, indem sie die Funktion der Zellmembran in Hefezellen der Gattung *Candida* sp. stört. Der gleiche Mechanismus könnte auch die verbesserte Wirkung gegenüber *P. viticola* bei der Kombination von Rebholz- mit Apfelextrakten erklären, deren Chlorogensäure dazu beigetragen haben könnte, das Eindringen weiterer aktiver Komponenten (z. B. Stilbenoide, Quercetin- und Phloretinderivate) in die Zellen des Erregers (hier: Sporangien und/oder Zoosporen) zu verbessern. Darüber hinaus könnten Flavan-3-ole mit antimykotischen Eigenschaften (z. B. Catechin, Procyanidin B1)[33], die sowohl im Apfel- als auch im Rebholzextrakt enthalten sind, den Krankheitsschutz in der vorliegenden Studie zusätzlich unterstützt haben. Eine vollständige Entschlüsselung der Rebholz-Polyphenole einschließlich ihres Beitrags zum Krankheitsschutz steht jedoch noch aus und erfordert weitere systematische Studien.

In diesem Zusammenhang ist es auch wichtig, eine mögliche unterstützende Wirkung des Hilfsstoffes Ligninsulfonat zu hinterfragen, dem antimykotische Eigenschaften gegenüber verschiedenen (humanpathogenen) *Candida*-Ar-

ten nachgesagt werden.[34] In den Gewächshausstudien zeigte sich weder eine antimykotische Wirkung auf die Freisetzung und Motilität von *P. viticola*-Zoosporen auf Agarplatten noch beim Solo-Test auf Blättern von inokulierten Topfreben. Dies könnte auf eine gattungsspezifische Aktivität der Ligninsulfonate hinweisen.

Die vorliegende Studie bestätigte, dass sowohl stilbenoidreiche Rebholzextrakte als auch flavonoidreiche Apfelextrakte als antimykotische Substanzen fungieren können, um kupferbasierte Pestizide zur Bekämpfung des Falschen Mehltaus im ökologischen Weinbau teilweise oder vollständig zu ersetzen. Zum ersten Mal konnte gezeigt werden, dass Rebholzextrakte die antimykotische Wirkung kupferhaltiger Pflanzenschutzmittel synergistisch verstärken, wenn die beiden Mischungspartner in jeweils spezifischen Konzentrationen vorliegen. Diese Ergebnisse könnten dazu beitragen, die Umsetzung umweltpolitisch wichtiger Ziele hinsichtlich der Verringerung des Pestizideinsatzes in der Landwirtschaft - insbesondere im ökologischen Weinbau - und des Recyclings von Abfallstoffen in naher Zukunft maßgeblich zu unterstützen. Der Einsatz solcher Extrakte über den ökologischen Weinbau hinaus im integrierten Weinbau sowie in weiteren wirtschaftlich wichtigen Pathosystemen des ökologischen und integrierten Landbaus (z. B. Apfel/*Venturia inaequalis,* Kartoffel/*Phytophthora infestans,* Hopfen/*Pseudoperonospora humuli*) sollte aufgrund des bedeutenden ökologischen und ökonomischen Potenzials experimentell erforscht werden.

**Beispiel 2:**

**Materialien und Methoden**

**Chemikalien:**

Für die HPLC-Analysen wurden authentische Standards (99 %) von Phloretin-2'-O-Xyloglucosid, Chlorogensäure, Kryptochlorogensäure und Quercetin-3-O-Xyloglucosid von TransMIT Chemicals (Gießen, Deutschland) bezogen, während Ferulasäure und p-Cumarsäure von Sigma Aldrich (Darmstadt, Deutschland) geliefert wurden. Standards für Quercetin-3-O-Arabinosid, Gluco-, Galacto- und Rhamnosid, Hydroxyphloretin, Phlorizin, Catechin, Epicatechin und Procyanidin B1, B2 und C1 sowie die Stilbenoide (E)-Resveratrol, (E)-ε-Viniferin und (E)-Piceatannol wurden von Extrasynthese (Genay, Frankreich) bezogen. Ampelopsin A, Hopeaphenol und Isohopeaphenol wurden aus einem Rebholzextrakt nach Macke et al.[34] isoliert. Des Weiteren wurden Acetonitril und Ameisensäure in HPLC-Qualität (Merck, Darmstadt, Deutschland) sowie Reinstwasser (Elga Purelab, Celle, Deutschland) verwendet.

Natriumligninsulfonat wurde von Otto Dille (Norderstedt, Deutschland) bezogen. Ethanol wurde von Martin Mundo (Mainz, Deutschland) bezogen und enthielt 1 ml/100 ml Methylethylketon.

**Charakterisierung der phenolischen Verbindungen in Rebholz- und Apfelextrakten:**

Die Analyse der Stilbenoide in Rebholzextrakten (LC-Methode A) wurde auf einer Hypersil Gold RP-18-Säule (150 × 2,1 mm Innendurchmesser, 3 μm Partikelgröße, Thermo Fisher Scientific, Dreieich, Deutschland) bei 40 °C durchgeführt. Die Elutionsmittel waren 0,1 ml/100 ml wässrige Ameisensäure (A) und Acetonitril (B), die mit einer Flussrate von 0,3 mL/min und dem folgenden linearen Gradienten verwendet wurden: 0 min (15 % B), 10 min (50 % B), 11 min (50 % B), 12 min (100 % B), 16 min (100 % B), 17 min (15 % B) und 21 min (15 % B). Die Gesamtlaufzeit betrug 21 min. Die Verbindungen wurden anhand von Retentionszeiten, UV- und Massenspektren mit denen von authentischen Standards oder mit Daten aus der Literatur identifiziert. Die Quantifizierung erfolgte an den jeweiligen Absorptionsmaxima der Verbindungen unter Verwendung linearer Kalibrierungen, die mit authentischen Standards durchgeführt wurden. Wenn keine authentischen Standards verfügbar waren, d. h. für di- und oligomere Stilbenoide, wurden die Konzentrationen durch Anwendung der Kalibrierung von ε-Viniferin bei 323 nm (für ω-Viniferin und Vitisin B) oder Ampelopsin A bei 280 nm (für Pallidol) geschätzt und für die molare Masse korrigiert, wie dies bereits von Triska et al.[35] durchgeführt wurde.

Die Analysen der phenolischen Verbindungen im Apfelextrakt sowie der Flavonoide im Rebholzextrakt (LC-Methode B) wurden auf einer Luna Omega C18-Säule (100 × 2,1 mm Innendurchmesser, 1,6 μm Partikelgröße, Phenomenex, Aschaffenburg, Deutschland) bei 40 °C durchgeführt. Die Elutionsmittel waren 2 ml/100 ml wässrige Ameisensäure (A) und Acetonitril/Ameisensäure (98 ml/2 ml, B), die mit einer Flussrate von 0,35 mL/min und dem folgenden linearen Gradienten verwendet wurden: 0 min (5,0 % B), 1 min (5,0 % B), 4,5 min (13,5 % B), 8,0 min (27,5 % B), 9,5 min (50,0 % B), 9,6 min (100,0 % B), 11,5 min (100,0 % B) und 14,5 min (5 % B). Die Gesamtlaufzeit betrug 14,5 Minuten.

Die Identifizierung der Verbindungen erfolgte mit einem UHPLC-DAD-ESI-QTOF-HR-MS/MS (Bruker Daltonik, Bremen, Deutschland) unter Verwendung der folgenden Parameter: negativer Ionisierungsmodus; Kapillarspannung, 3500 V; Zerstäubertemperatur, 250 °C; Kollisionsenergie, 10,0 eV; Zerstäubergasdruck, 3 bar; Trockengasdurchsatz, 7 L/min. Sofern verfügbar, wurden die Verbindungen zusätzlich durch den Vergleich der Retentionszeiten und UV-Spektren mit denen von authentischen Referenzsubstanzen identifiziert. Die Quantifizierung erfolgte an den jeweiligen Absorptionsmaxima der Verbindungen unter Verwendung linearer Kalibrierungen, die mit authentischen Standards durchgeführt wurden. Die Konzentrationen von Hydroxyphloretin-Derivaten wurden als Hydroxyphloretin berechnet, und Ferulasäure- und p-Cumarsäure-Derivate wurden als Ferulasäure bzw. p-Cumarsäure quantifiziert und gegebenenfalls um ihre Molekularmasse korrigiert.

**Ergebnisse und Diskussion:**

**Charakterisierung der phenolischen Verbindungen in den Rebholz- und Apfelextrakten:**

Vor den antimykotischen Untersuchungen wurden die in diesen Experimenten verwendeten Pflanzenextrakte auf ihre phenolischen Verbindungen unter Berücksichtigung der Stilbenoide analysiert (Fig. 4A-C). Die Stilbenoid-Zusammensetzung der Rebholzextrakte der Sorten Pinot Noir und Accent und der Apfelextrakte sowie von Vineatrol® sind in Tabelle 3 aufgeführt. Ein Vergleich der HPLC-Profile zwischen den Extrakten der Rebsorten Pinot Noir und Accent zeigte Unterschiede, sowohl quantitativ als auch qualitativ. In den Rebholzextrakten der Sorte Pinot Noir waren die Gesamtmengen an Stilbenoiden höher (10,3 g/100 g) als in denen von cv. Accent (8,9 g/100 g), mit dem Monostilbenoid Resveratrol als häufigstem Stilbenoid und einem Anteil an di- und oligomeren Stilbenoiden von 53 %. Im Extrakt der Rebsorte Accent wurden jedoch höhere relative Anteile an di- und oligomeren Stilbenoiden gefunden (69 %), wobei ε-Viniferin das häufigste Stilbenoid war (Tab. S1), wie vorab berichtet.[21]

Das Stilbenoid-Profil von Vineatrol® ähnelte dem der Rebholzextrakte aus der Rebsorte Pinot Noir, allerdings mit deutlich höheren Konzentrationen der einzelnen Stilbenoide (Tab. 3). Interessanterweise lag in unseren Extrakten das Tetramer Hopeaphenol (Fig. 4, Peak 5) in höheren Konzentrationen vor als sein Isomer Isohopeaphenol (Fig. 4, Peak 6), während es bei Vineatrol® umgekehrt der Fall war, was möglicherweise auf die unterschiedlichen Rebsorten zurückzuführen ist, die für die Herstellung der Extrakte verwendet wurden. Bemerkenswert ist, dass neben Vitisin B Hopeaphenol als das Stilbenoid aus Rebholz mit der stärksten antimykotischen Wirkung gegenüber *P. viticola* vorgeschlagen wurde. Diese ist 2,5-mal höher ist als die seines Isomers und sogar 7-mal höher als die von Resveratrol.[14]

Die Analyse der Rebholzextrakte der Rebsorte Pinot Noir auf den Gehalt an Flavonoiden ergab, dass Catechin (9,2 mg/g) das am häufigsten vorkommende Flavanol im Extrakt war, gefolgt von Procyanidin B1 (5,9 mg/g), Epicatechin (3,0 mg/g) und Procyanidin C1 (3,0 mg/g) (Tab. 3). Im Extrakt der Sorte Accent waren die Gehalte ähnlich, mit Ausnahme des geringeren Gehaltes an Procyanidin C1 (1,4 mg/g). Vineatrol® wies allgemein niedrigere Flavan-3-ol-Gehalte von 1,0 mg/g Catechin, 0,9 mg/g Procyanidin C1, 0,6 mg/g Epicatechin und kein Procyanidin B1 auf. Diese Ergebnisse stimmen mit denen von Gabaston et al.[4] überein, die 1,0 mg/g Catechin in ihrem selbst produzierten Rebholzextrakt aus der Rebsorte Malbec feststellten, während vorliegende Extrakte bis zu 10-mal höhere Flavan-3-ol-Gehalte aufwiesen. Interessanterweise waren in unserer Studie die Gehalte dieser Flavonoide in Vineatrol® um das 7-fache niedriger als in unseren Rebholzextrakten, während die Mengen an Stilbenoiden um das 3-fache höher lagen als in unseren Extrakten (Tab. 3), was auf die unterschiedlichen verwendeten Sorten und auf die spezifischen Extraktionsmethoden zurückzuführen sein könnte.

Im Apfelextrakt wurden keine Stilbenoide nachgewiesen. Stattdessen enthielt dieser Erxtrakt mit einer phenolischen Gesamtmenge von 405 mg/g Apfelextrakt (w/w) hauptsächlich Chlorogensäure (211 mg/g) und weitere Hydroxyzimtsäuren (31 mg/g), Phlorizin und Quercetin einschließlich ihrer Derivate (62 mg/g bzw. 2,5 mg/g) sowie die Flavan-3-ole Catechin (7 mg/g), Epicatechin (35 mg/g), Procyanidin B1 (5 mg/g), Procyanidin B2 (36 mg/g) und Procyanidin C1 (15 mg/g) (Fig. 4, Tab 3).

Tabelle 3: Stilbenoid- und Flavonoid-Zusammensetzung der Rebholzextrakte der Rebsorten Pinot Noir und Accent sowie von Vineatrol® und des Apfelextraktes bestimmt mittels HPLC-DAD, wobei die absoluten Konzentrationen in Gewichtsprozent der pulverförmigen Extrakte und die relativen Konzentrationen in Bezug auf die Gesamtmenge der jeweiligen Verbindungsklasse angegeben sind.

| Stilbenoid | Rebholzextrakt aus cv. Pinot Noir | | Rebholzextrakt aus cv. Accent | | Vineatrol® | | Apfelextrakt | |
|---|---|---|---|---|---|---|---|---|
| | Absolut | Relativ | Absolut | Relativ | Absolut | Relativ | Absolut | Relativ |
| Ampelopsin A | 0,2 ± 0,0 | 1,9 | 0,3 ± 0,1 | 3,4 | 4,9 ± 0,4 | 13,5 | n.d. | n.d. |
| Piceatannol | 1,1 ± 0,2 | 10,7 | 0,8 ± 0,1 | 9,0 | 1,9 ± 0,2 | 5,2 | n.d. | n.d. |
| Pallidol | 0,2 ± 0,1 | 1,9 | n.d. | n.d. | 2,2 ± 0,0 | 6,1 | n.d. | n.d. |
| Resveratrol | 3,7 ± 0,2 | 35,9 | 2,0 ± 0,3 | 22,5 | 10,5 ± 0,4 | 28,9 | n.d. | n.d. |
| Hopeaphenol | 1,3 ± 0,3 | 12,6 | 1,7 ± 0,3 | 19,1 | 1,2 ± 0,0 | 3,3 | n.d. | n.d. |
| Isohopeaphenol | 0,3 ± 0,1 | 2,9 | 0,1 ± 0,0 | 1,1 | 5,1 ± 0,6 | 14,0 | n.d. | n.d. |
| $\varepsilon$-Viniferin | 2,9 ± 0,7 | 28,2 | 3,2 ± 0,2 | 36,0 | 8,3 ± 1,0 | 22,9 | n.d. | n.d. |
| $\omega$-Viniferin | 0,1 ± 0,0 | 1,0 | n.d. | n.d. | 2,1 ± 0,1 | 5,8 | n.d. | n.d. |
| Vitisin B | 0,5 ± 0,2 | 4,9 | 0,8 ± 0,4 | 9,0 | 0,1 ± 0,0 | 0,3 | n.d. | n.d. |
| **gesamte oligomere Stilbenoide\*** | **5,5 ± 1,4** | **53,4** | **6,1 ± 1,0** | **68,5** | **23,9 ± 0,6** | **65,8** | **n.d.** | **n.d.** |
| **Stilbenoide gesamt** | **10,3 ± 1,8** | **100** | **8,9 ± 1,4** | **100** | **36,3 ± 2,7** | **100** | **n.d.** | **n.d.** |
| **Flavonoide** | | | | | | | | |
| Catechin | 0,9 ± 0,1 | 42,9 | 0,9 ± 0,0 | 50,0 | 0,1 ± 0,0 | 33,3 | 0,7 ± 0,0 | 4,2 |
| Epicatechin | 0,3 ± 0,1 | 14,3 | 0,3 ± 0,0 | 16,7 | 0,1 ± 0,1 | 33,3 | 3,5 ± 0,1 | 21,5 |
| Procyanidin B1 | 0,6 ± 0,0 | 2,6 | 0,5 ± 0,2 | 27,8 | n.d. | n.d. | 0,5 ± 0,0 | 3,1 |
| Procyanidin B2 | n.d. | n.d. | n.d. | n.d. | n.d. | n.d. | 3,6 ± 0,0 | 22,1 |
| Procyanidin C1 | 0,3 ± 0,1 | 14,3 | 0,1 ± 0,1 | 5,6 | 0,1 ± 0,0 | 33,3 | 1,5 ± 0,0 | 9,3 |
| Phlorizin einschl. Derivate | n.q. | n.q. | n.q. | n.q. | n.q. | n.q. | 6,2 ± 0,1 | 38,0 |
| Quercetin einschl. Derivate | n.q. | n.q. | n.q. | n.q. | n.q. | n.q. | 0,3 ± 0,0 | 1,8 |
| **Flavonoide gesamt** | **2,1 ± 0,3** | **100** | **1,8 ± 0,3** | **100** | **0,3 ± 0,1** | **100** | **16,3 ± 0,2** | **100** |
| **andere (Poly)phenole** | | | | | | | | |
| Chlorogsäure | n.d. | n.d. | n.d. | n.d. | n.d. | n.d. | 21,1 ± 0,0 | 52,1 |
| andere Hydroxyzimtsäuren | n.d. | n.d. | n.d. | n.d. | n.d. | n.d. | 3,1 t 0,0 | 7,7 |

| | | | | |
|---|---|---|---|---|
| andere (Poly)phenole | | | | |
| (Poly)phenole gesamt‡ | 12,4 ± 2,1 | 10,7 ± 1,7 | 36,6 ± 2,8 | 40,5 ± 0,2 | 100 |

† die gesamten oligomeren Silbenoide beziehen sich auf die Summe der Mengen von Ampelopsin A, Pallidol, Hopeaphenol, Isohopeaphenol, $\varepsilon$-Viniferin $\omega$-Viniferin und Vitisin B.

* Summe der gesamten Stilbenoide, der gesamten Flavonoide und anderer (Poly)phenole, n.d. = nicht nachgewiesen, n.q. = nicht quantifiziert.

Die vorliegende Erfindung kann wie folgt zusammengefasst werden: Der ökologische Weinbau sucht nach nachhaltigen Alternativen für kupferhaltige Pflanzenschutzmittel zur Bekämpfung des Falschen Mehltaus, hervorgerufen durch *Plasmopara viticola.* Kupferhaltige Pflanzenschutzmittel sind insbesondere für Bodenlebewesen toxisch und sollen EU-weit kurzfristig reduziert und mittelfristig substituiert werden. Es ist bekannt, dass (poly)phenolreiche Extrakte aus landwirtschaftlichen Nebenprodukten eine antimykotische Wirkung haben. Diesen positiven Eigenschaften, die solche Extrakte für einen Einsatz im Bereich Pflanzenschutz der landwirtschaftlichen Wertschöpfungskette prädestinieren, stehen allerdings hohe Produktionskosten, geringe Wirksamkeiten sowie eine unzureichende Anwenderfreundlichkeit (z. B. geringe Rieselfähigkeit und/oder starke Klebrigkeit) gegenüber, die ihre Nutzung in der landwirtschaftlichen Praxis bisher oftmals begrenzt oder sogar verhindert haben.

Es werden neuartige, ligninsulfonatbasierte Rebholzeextrakt-Formulierungen sowie ein Apfelextrakt entwickelt und hergestellt, einschließlich einer detaillierten (Poly)phenol-Charakterisierung mittels HPLC-PDA-MS. Die Rebholzextrakt-Formulierungen weisen gegenüber nicht-ligninsulfonatbasierten Formulierungen oder Roh-Extrakten eine deutlich verbesserte Handhabbarkeit (Anwenderfreundlichkeit) auf. Dies gilt beispielsweise für die Rieselfähigkeit des Extraktes. Die ligninsulfonatbasierten Rebholzextrakte reduzierten in der Solo-Anwendung die Befallsstärke des Falschen Mehltaus an Topfreben in Gewächshausversuchen gegenüber der mit Wasser behandelten (Positiv-)Kontrolle in Abhängigkeit von der applizierten Dosis um 29-69 %, während die Anwendung eines kupferhaltigen Pflanzenschutzmittels (Standardmittel im ökologischen Weinbau) in der Solo-Anwendung und in der praxisüblichen Konzentration eine Reduzierung der Befallsstärke gegenüber der mit Wasser behandelten (Positiv-)Kontrolle von ca. 56 % erreichte. Bei kombinierter Anwendung des ligninsulfonatbasierten Rebholzextraktes mit einem kupferhaltigen Pflanzenschutzmittel wurde die Befallsstärke um 78-92 % verringert, wobei sich im Falle eines spezifischen Mischungsverhältnisses ein synergistischer Effekt zeigte. Bei der Kombination von Rebholzextrakt-Formulierungen mit dem Apfelextrakt wurde eine additive Wirkung festgestellt (Reduzierung der Befallsstärke gegenüber der mit Wasser behandelten (Positiv-)Kontrolle: 80 %).

Die untersuchten Pflanzenextrakte können kupferhaltige Pflanzenschutzmittel, die zur Bekämpfung des Falschen Mehltaus an Weinreben eingesetzt werden und derzeit stark im Fokus der gesellschaftlichen Debatte um Biodiversität und Bodenschutz stehen, sowohl reduzieren und synergistisch verstärken als auch ersetzen.

Die Erfindung wird anhand von Figuren, Tabellen und Beschreibungen umfassend dargelegt und erklärt. Die hier dargestellten Beschreibungen und Erklärungen sind als Beispiele und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Figuren und Tabellen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Bezugszeichen in den Patentansprüchen sind nicht einschränkend zu verstehen.

**Quellen**

1 United States Environmental Protection Agency, Conventional Reduced Risk Pesticide Program [accessed 19 November 2022].

2 European Commission, Farm to Fork Strategy. https://food.ec.europa.eu/horizontal-topics/farm-fork-strategy_en [accessed 19 September 2022].

3 Willer H, Trávníč ek J, Meier C and Schlatter B, editors. The World of Organic Agriculture: Statistics and Emerging Trends 2022, Forschungsinstitut für biologischen Landbau (FIBL), Frick (2022).

4 FAO, FAOstats - Crops and livestock products. https://www.fao.org/faostat/en/#data/QCL [accessed 19 September 2022].

5 Julius-Kühn-Institut, Behandlungsindex. https://papa.julius-kuehn.de/index.php?menuid=43 [accessed 19 September 2022].

6 Pugliese M, Gullino ML and Garibaldi A, Effect of Climate Change on Infection of Grapevine by Downy and Powdery Mildew under Controlled Environment. Commun. Agric. Appl. Biol. 76:579-582 (2011).

7 Dagostin S, Schärer H-J, Pertot I and Tamm L, Are there Alternatives to Copper for Controlling Grapevine Downy Mildew in Organic Viticulture? Crop Prot. 30:776-788 (2011).

8 Bleyer G, Lösch F, Schumacher Sand Fuchs R, Together for the Better: Improvement of a Model Based Strategy for Grapevine Downy Mildew Control by Addition of Potassium Phosphonates. Plants 9 (2020).

9 Romanazzi G, Mancini V, Foglia R, Marcolini D, Kavari M and Piancatelli S, Use of Chitosan and Other Natural Compounds Alone or in Different Strategies with Copper Hydroxide for Control of Grapevine Downy Mildew. Plant Dis. 105:3261-3268 (2021).

10 Cohen Y, Wang W, Ben-Daniel B-H and Ben-Daniel Y, Extracts of Inula viscosa Control Downy Mildew of Grapes Caused by Plasmopara viticola. Phytopathology 96:417-424 (2006).

11 Oleszek M, Pecio L, Kozachok S, Lachowska-Filipiuk Z, Oszust K and Frąc M, Phytochemicals of Apple Pomace as Prospect Bio-Fungicide Agents against Mycotoxigenic Fungal Species-*In Vitro* Experiments. *Toxins (Basel)* **11** (2019).

12 Aliaño-González MJ, Richard T and Cantos-Villar E, Grapevine Cane Extracts: Raw Plant Material, Extraction Methods, Quantification, and Applications. Biomolecules 10 (2020).

13 Billet K, Malinowska MA, Munsch T, Unlubayir M, Bernonville TD de, Besseau S, Courdavault V, Oudin A, Pichon O, Clastre M, Giglioli-Guivarc'h N and Lanoue A, Stilbenoid-Enriched Grape Cane Extracts for the Biocontrol of Grapevine Diseases, in Plant Defence: Biological Control, ed. by Mérillon J-M and Ramawat KG, Springer International Publishing, Cham, pp. 215-239 (2020).

14 Gabaston J, Cantos-Villar E, Biais B, Waffo-Teguo P, Renouf E, Corio-Costet M-F, Richard T and Mérillon J-M, Stilbenes from Vitis vinifera L. Waste: A Sustainable Tool for Controlling Plasmopara viticola. J. Agric. Food Chem. 65:2711-2718 (2017).

15 Schnee S, Queiroz EF, Voinesco F, Marcourt L, Dubuis P-H, Wolfender J-L and Gindro K, Vitis vinifera Canes, A New Source of Antifungal Compounds against Plasmopara viticola, Erysiphe necator, and Botrytis cinerea. J. Agric. Food Chem. 61:5459-5467 (2013).

16 Taillis D, Pébarthé-Courrouilh A, Lepeltier E, Petit E, Palos-Pinto A, Gabaston J, Mérillon J-M, Richard T and Cluzet S, A Grapevine By-product Extract Enriched in Oligomerised Stilbenes to Control Downy Mildews: Focus on its Modes of Action towards Plasmopara viticola. OENO One 56:55-68 (2022).

17 Richard T, Abdelli-Belhad A, Vitrac X, Waffo-Téguo P and Mérillon J-M, Vitis vinifera Canes, a Source of Stilbenoids against Downy Mildew. OENO One 50 (2016).

18 Billet K, Delanoue G, Arnault I, Besseau S, Oudin A, Courdavault V, Marchand PA, Giglioli-Guivarc'h N, Guérin L and Lanoue A, Vineyard Evaluation of Stilbenoid-rich Grape Cane Extracts against Downy Mildew: A Largescale Study. Pest Manag. Sei. 75:1252-1257 (2019).

19 Actichem, Vineatrol®. https://actichem.net/vineatrol/ [accessed 19 September 2022].

20 Gorena T, Saez V, Mardones C, Vergara C, Winterhalter P and Baer D von, Influence of Post-pruning Storage on Stilbenoid Levels in Vitis vinifera L. Canes. Food Chem. 155:256-263 (2014).

21 Besrukow P, Irmler J, Schmid J, Stoll M, Winterhalter P, Schweiggert R and Will F, Variability of Constitutive Stilbenoid Levels and Profiles in Grape Cane (Vitis vinifera L.) Depending upon Variety and Clone, Location in the Vineyard, Pruning Time, and Vintage. J. Agric. Food Chem. (2022).

22 Massi F, Torriani SFF, Borghi Land Toffolatti SL, Fungicide Resistance Evolution and Detection in Plant Pathogens: Plasmopara viticola as a Case Study. Microorganisms 9 (2021).

23 European and Mediterranean Plant Protection Organization, Guidelines for the Efficacy Evaluation of Plant Protection Products: Plasmopara viticola - PP 1/31(2), in Introduction to the Efficacy Evaluation of Plant Protection Products, ed. by EPPO, Paris (1997).

24 Cohen Y and Levy Y, Joint Action of Fungicides in Mixtures: Theory and Practice. Phytoparasitica 18:159-169 (1990).

25 Gessler C, Pertot I and Perazzolli M, Plasmopara viticola: A Review of Knowledge on Downy Mildew of Grapevine and Effective Disease Management. Phytopathol. Mediterr. 50:3-44 (2011).

26 Lambert C, Richard T, Renouf E, Bisson J, Waffo-Téguo P, Bordenave L, Ollat N, Mérillon J-M and Cluzet S, Comparative Analyses of Stilbenoids in Canes of Major Vitis vinifera L. Cultivars. J. Agric. Food Chem. 61:11392-11399 (2013).

27 Bona GS de, Adrian M, Negrel J, Chiltz A, Klinguer A, Poinssot B, Héloir M-C, Angelini E, Vincenzi S and Bertazzon N, Dual Mode of Action of Grape Cane Extracts against Botrytis cinerea. J. Agric. Food Chem. 67:5512-5520 (2019).

28 Office International de la Vigne et du Vin, editor. The OIV Descriptor List for Grape Varieties and Vitis Species, Dedon (2009).

29 Gisi U and Sierotzki H, Fungicide Modes of Action and Resistance in Downy Mildews, in The Downy Mildews - Genetics, Molecular Biology and Control, ed. by Lebeda A, Spencer-Phillips PTN and Cooke BM, Springer Netherlands, Dordrecht, pp. 157-167 (2008).

30 Jampilek J, How Can We Bolster the Antifungal Drug Discovery Pipeline? Future Med. Chem. 8:1393-1397 (2016).

31 Malandrakis AA, Kavroulakis N and Chrysikopoulos CV, Synergy between Cu-NPs and Fungicides against Botrytis cinerea. Sci. Total Environ. 703:135557 (2020).

32 Sung WS and Lee DG, Antifungal Action of Chlorogenic Acid against Pathogenic Fungi, Mediated by Membrane Disruption. Pure Appl. Chem. 82:219-226 (2010).

33 Ullah C, Unsicker SB, Fellenberg C, Constabel CP, Schmidt A, Gershenzon J and Hammerbacher A, Flavan-3-ols Are an Effective Chemical Defense against Rust Infection. Plant Physiol. 175:1560-1578 (2017).

34 Jha A and Kumar A, Deciphering the Role of Sodium Lignosulfonate against Candida spp. as Persuasive Anticandidal Agent. Int. J. Biol. Macromol. 107:1212-1219 (2018).

35 Macke S, Jerz G, Empl MT, Steinberg P and Winterhalter P, Activity-Guided Isolation of Resveratrol Oligomers from a Grapevine-Shoot Extract using Countercurrent Chromatography. J. Agric. Food Chem. 60:11919-11927 (2012).

36 Tříska J, Vrchotovä N, Balík J, Soural I and Sotolár R, Variability in the Content of Trans-Resveratrol, Trans-ε-Viniferin and R2-Viniferin in Grape Cane of Seven *Vitis vinifera* L. Varieties during a Three-Year Study. *Molecules* **22** (2017).

**Patentansprüche**

1.  Pestizid, das folgende Bestandteile umfasst:

    (a) einen Extrakt aus Reststoffen des Weinbaus, der bei der Verwendung im ökologischen oder integrierten Landbau eine fungizide Wirksamkeit hat, wobei der Extrakt aus Reststoffen des Weinbaus aus Rebholz gewonnen wird, und
    (b) 1 bis 99 g/100 ml Ligninsulfonat, bevorzugt 10 g/100 ml bis 70 g/100 ml, besonders bevorzugt 20 g/100 ml bis 50 g/100 ml Ligninsulfonat und/oder einen Apfelextrakt, der bei der Verwendung im ökologischen oder integrierten Landbau eine fungizide Wirksamkeit hat.

2.  Pestizid nach einem der vorstehenden Ansprüche, wobei der Apfelextrakt aus Reststoffen der Apfelwirtschaft und -verarbeitung gewonnen wird.

3.  Pestizid nach einem der vorstehenden Ansprüche, wobei das Gewinnen aus Rebholz bzw. das Gewinnen aus Reststoffen der Apfelwirtschaft und -verarbeitung dadurch erfolgt, dass das Rebholz bzw. die Reststoffe mit einem Lösungsmittel behandelt und anschließend das Lösungsmittel zumindest teilweise entfernt wird.

4.  Pestizid nach Anspruch 3, wobei

    das Lösungsmittel mit Wasser mischbar oder mit Wasser unmischbar ist und insbesondere Wasser, Methanol, Ethanol, Propanol, Butanol, Ethylacetat, Aceton oder Mischungen von zwei oder mehreren dieser aufweist; dem Lösungsmittel Hilfsstoffe wie Ligninsulfonat, Stabilisatoren, insbesondere Antioxidantien und/oder UV-Stabilisatoren, pH-Regulatoren und/oder Benetzungshilfsmitteln zugesetzt sind; und/oder das Lösungsmittel reines Wasser ist.

5.  Pestizid nach einem der Ansprüche 3 oder 4, wobei die zumindest teilweise Entfernung des Lösungsmittels durch ein Verfahren erfolgt, ausgewählt unter Gefrier-, Sprüh-, Band-, Walzen-, Wärme- und Vakuumkonzentrierung und -trocknung.

6.  Pestizid nach einem der Ansprüche 3 bis 5, wobei der Reststoff aus der Apfelwirtschaft und -verarbeitung auf ein Absorberharz aufgetragen und nachfolgend davon eluiert wird.

7.  Pestizid nach einem der vorstehenden Ansprüche mit mindestens einem der folgenden weiteren Bestandteile:

    0,1 bis 10 g/100 ml, bevorzugt 0,1 g/100 ml bis 2 g/100 ml, eines oder mehrerer Stabilisatoren aus der Gruppe der Antioxidantien, insbesondere Tocopherole, Ascorbinsäure, BHT, oder UV-Absorber, insbesondere Zinkoxid, phenolische Extrakte, Titandioxid; 0,1 bis 10 g/100 ml, bevorzugt 0,1 g/100 ml bis 2 g/100 ml, eines oder mehrerer Benetzungshilfsmittel, insbesondere Emulgatoren wie Lecithine, Saponine; und 0,1 bis 10 g/100 ml, bevorzugt 0,1 g/100 ml bis 2 g/100 ml, eines pH-Regulators, insbesondere Laugen wie Natron- oder Kalilauge, Carbonate, Hydrogencarbonate, oder einer Säure, insbesondere Schwefelsäure oder Citronensäure.

8.  Pestizid, umfassend mindestens zwei fungizide Komponenten, wovon (a) eine aus der Gruppe der Pflanzenschutzmittel ausgewählt ist, insbesondere aus der Gruppe der kupferhaltigen Pflanzenschutzmittel, und (b) die andere einen Extrakt aus Reststoffen des Weinbaus, der aus Rebholz gewonnen wird, und/oder einen Apfelextrakt aufweist.

9.  Pestizid nach Anspruch 8, wobei der Extrakt aus Reststoffen des Weinbaus und/oder Apfelextrakt formuliert ist oder als Rohextrakt vorliegt.

10. Pestizid nach einem der Ansprüche 8 oder 9, wobei weiterhin ein fungizid-wirkender Bestandteil, ein Formulierungshilfsstoff, und/oder ein Stabilisator vorliegen.

11. Verfahren zur Herstellung eines Pestizids nach einem der vorstehenden Ansprüche, wobei der Extrakt aus Reststoffen des Weinbaus und/oder der Apfelextrakt gewonnen wird durch Behandlung des Rebholzes bzw. der Reststoffe der Apfelwirtschaft und -verarbeitung mit einem Lösungsmittel und anschließender zumindest teilweiser Entfernung des Lösungsmittels, wodurch ein Rohextrakt erhalten wird, zu dem gegebenenfalls andere Bestandteile zugegeben werden, wie Ligninsulfonat und/oder kupferbasierte Pflanzenschutzmittel.

12. Verwendung eines Pestizids nach einem der Ansprüche 1 bis 10 zur Bekämpfung von als lästig oder schädlich angesehenen Lebewesen, Viren und Viroiden.

13. Verwendung nach Anspruch 12 zur Bekämpfung des Falschen Mehltaus der Weinrebe (Plasmopara viticola).

14. Verwendung nach einem der Ansprüche 12 oder 13 im ökologischen Landbau und/oder in der integrierten Landwirtschaft.

15. Verwendung nach einem der Ansprüche 12 bis 14, wobei der Extrakt aus Reststoffen des Weinbaus gleichzeitig oder zeitlich versetzt entweder mit einem Fungizid, insbesondere mit einem kupferbasierten Wirkstoff, und/oder einem Apfelextrakt eingesetzt wird.

Fig. 1

Fig.2

Fig. 3

Fig.4

Signalintensität

A) Rebholzextrakt aus cv. Pinot Noir (LC-Methode A)

B) Vineatrol (LC-Methode A)

C) Rebholzextrakt aus cv. Accent (LC-Methode A)

D) Apfelextrakt (LC-Methode B)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2003095825 A

**In der Beschreibung aufgeführte Nicht-Patentliteratur**

- *Conventional Reduced Risk Pesticide Program,* 19. November 2022
- *Farm to Fork Strategy,* 19. September 2022, https://food.ec.europa.eu/horizontal-topics/farm-fork-strategy_en
- *FAO, FAOstats - Crops and livestock products,* 19. September 2022, https://www.fao.org/faostat/en/#data/QCL
- *Behandlungsindex,* 19. September 2022, https://papa.julius-kuehn.de/index.php?menuid=43
- **PUGLIESE M ; GULLINO ML ; GARIBALDI A.** Effect of Climate Change on Infection of Grapevine by Downy and Powdery Mildew under Controlled Environment. *Commun. Agric. Appl. Biol.,* 2011, vol. 76, 579-582
- **DAGOSTIN S ; SCHÄRER H-J ; PERTOT I ; TAMM L.** Are there Alternatives to Copper for Controlling Grapevine Downy Mildew in Organic Viticulture?. *Crop Prot.,* 2011, vol. 30, 776-788
- **BLEYER G ; LÖSCH F ; SCHUMACHER SAND ; FUCHS R.** Together for the Better: Improvement of a Model Based Strategy for Grapevine Downy Mildew Control by Addition of Potassium Phosphonates. *Plants,* 2020, vol. 9
- **ROMANAZZI G ; MANCINI V ; FOGLIA R ; MARCOLINI D ; KAVARI M ; PIANCATELLI S.** Use of Chitosan and Other Natural Compounds Alone or in Different Strategies with Copper Hydroxide for Control of Grapevine Downy Mildew. *Plant Dis.,* 2021, vol. 105, 3261-3268
- **COHEN Y ; WANG W ; BEN-DANIEL B-H ; BEN-DANIEL Y.** Extracts of Inula viscosa Control Downy Mildew of Grapes Caused by Plasmopara viticola. *Phytopathology,* 2006, vol. 96, 417-424
- **ALIAÑO-GONZÁLEZ MJ ; RICHARD T ; CANTOS-VILLAR E.** Grapevine Cane Extracts: Raw Plant Material, Extraction Methods, Quantification, and Applications. *Biomolecules,* 2020, vol. 10
- Stilbenoid-Enriched Grape Cane Extracts for the Biocontrol of Grapevine Diseases. **BILLET K ; MALINOWSKA MA ; MUNSCH T ; UNLUBAYIR M ; BERNONVILLE TD DE ; BESSEAU S ; COURDAVAULT V ; OUDIN A ; PICHON O ; CLASTRE M.** Plant Defence: Biological Control. Springer International Publishing, Cham, 2020, 215-239
- **GABASTON J ; CANTOS-VILLAR E ; BIAIS B ; WAFFO-TEGUO P ; RENOUF E ; CORIO-COSTET M-F ; RICHARD T ; MÉRILLON J-M.** Stilbenes from Vitis vinifera L. Waste: A Sustainable Tool for Controlling Plasmopara viticola. *J. Agric. Food Chem.,* 2017, vol. 65, 2711-2718
- **SCHNEE S ; QUEIROZ EF ; VOINESCO F ; MARCOURT L ; DUBUIS P-H ; WOLFENDER J-L ; GINDRO K.** Vitis vinifera Canes, A New Source of Antifungal Compounds against Plasmopara viticola, Erysiphe necator, and Botrytis cinerea. *J. Agric. Food Chem.,* 2013, vol. 61, 5459-5467
- **TAILLIS D ; PÉBARTHÉ-COURROUILH A ; LEPELTIER E ; PETIT E ; PALOS-PINTO A ; GABASTON J ; MÉRILLON J-M ; RICHARD T ; CLUZET S.** A Grapevine By-product Extract Enriched in Oligomerised Stilbenes to Control Downy Mildews: Focus on its Modes of Action towards Plasmopara viticola. *OENO One,* 2022, vol. 56, 55-68
- **RICHARD T ; ABDELLI-BELHAD A ; VITRAC X ; WAFFO-TÉGUO P ; MÉRILLON J-M.** Vitis vinifera Canes, a Source of Stilbenoids against Downy Mildew. *OENO One,* 2016, vol. 50
- **BILLET K ; DELANOUE G ; ARNAULT I ; BESSEAU S ; OUDIN A ; COURDAVAULT V ; MARCHAND PA ; GIGLIOLI-GUIVARC'H N ; GUÉRIN L ; LANOUE A.** Vineyard Evaluation of Stilbenoid-rich Grape Cane Extracts against Downy Mildew: A Largescale Study. *Pest Manag. Sei.,* 2019, vol. 75, 1252-1257
- **GORENA T ; SAEZ V ; MARDONES C ; VERGARA C ; WINTERHALTER P ; BAER D VON.** Influence of Post-pruning Storage on Stilbenoid Levels in Vitis vinifera L. Canes. *Food Chem.,* 2014, vol. 155, 256-263

- **BESRUKOW P ; IRMLER J ; SCHMID J ; STOLL M ; WINTERHALTER P ; SCHWEIGGERT R ; WILL F.** Variability of Constitutive Stilbenoid Levels and Profiles in Grape Cane (Vitis vinifera L.) Depending upon Variety and Clone, Location in the Vineyard, Pruning Time, and Vintage. *J. Agric. Food Chem.,* 2022
- **MASSI F ; TORRIANI SFF ; BORGHI LAND.** Toffolatti SL, Fungicide Resistance Evolution and Detection in Plant Pathogens: Plasmopara viticola as a Case Study. *Microorganisms,* 2021, vol. 9
- Guidelines for the Efficacy Evaluation of Plant Protection Products: Plasmopara viticola - PP 1/31(2). Introduction to the Efficacy Evaluation of Plant Protection Products. EPPO, 1997
- **COHEN Y ; LEVY Y.** Joint Action of Fungicides in Mixtures: Theory and Practice. *Phytoparasitica,* 1990, vol. 18, 159-169
- **GESSLER C ; PERTOT I ; PERAZZOLLI M.** Plasmopara viticola: A Review of Knowledge on Downy Mildew of Grapevine and Effective Disease Management. *Phytopathol. Mediterr.,* 2011, vol. 50, 3-44
- **LAMBERT C ; RICHARD T ; RENOUF E ; BISSON J ; WAFFO-TÉGUO P ; BORDENAVE L ; OLLAT N ; MÉRILLON J-M ; CLUZET S.** Comparative Analyses of Stilbenoids in Canes of Major Vitis vinifera L. Cultivars. *J. Agric. Food Chem.,* 2013, vol. 61, 11392-11399
- **BONA GS DE ; ADRIAN M ; NEGREL J ; CHILTZ A ; KLINGUER A ; POINSSOT B ; HÉLOIR M-C ; ANGELINI E ; VINCENZI S ; BERTAZZON N.** Dual Mode of Action of Grape Cane Extracts against Botrytis cinerea. *J. Agric. Food Chem.,* 2019, vol. 67, 5512-5520
- The OIV Descriptor List for Grape Varieties and Vitis Species. Dedon, 2009
- Fungicide Modes of Action and Resistance in Downy Mildews. **GISI U ; SIEROTZKI H.** The Downy Mildews - Genetics, Molecular Biology and Control. Springer, 2008, 157-167
- **JAMPILEK J.** How Can We Bolster the Antifungal Drug Discovery Pipeline?. *Future Med. Chem.,* 2016, vol. 8, 1393-1397
- **MALANDRAKIS AA ; KAVROULAKIS N ; CHRYSIKOPOULOS CV.** Synergy between Cu-NPs and Fungicides against Botrytis cinerea. *Sci. Total Environ.,* 2020, vol. 703, 135557
- **SUNG WS ; LEE DG.** Antifungal Action of Chlorogenic Acid against Pathogenic Fungi, Mediated by Membrane Disruption. *Pure Appl. Chem.,* 2010, vol. 82, 219-226
- **ULLAH C ; UNSICKER SB ; FELLENBERG C ; CONSTABEL CP ; SCHMIDTA ; GERSHENZON J ; HAMMERBACHER A.** Flavan-3-ols Are an Effective Chemical Defense against Rust Infection. *Plant Physiol.,* 2017, vol. 175, 1560-1578
- **JHA A ; KUMAR A.** Deciphering the Role of Sodium Lignosulfonate against Candida spp. as Persuasive Anticandidal Agent. *Int. J. Biol. Macromol.,* 2018, vol. 107, 1212-1219
- **MACKE S ; JERZ G ; EMPL MT ; STEINBERG P ; WINTERHALTER P.** Activity-Guided Isolation of Resveratrol Oligomers from a Grapevine-Shoot Extract using Countercurrent Chromatography. *J. Agric. Food Chem.,* 2012, vol. 60, 11919-11927